# EUROPEAN PATENT SPECIFICATION

(11) **EP 2 409 610 B1**
(45) Date of publication and mention of the grant of the patent: **23.04.2014**
(21) Application number: 11154834.3
(22) Date of filing: 17.02.2011
(51) Int. Cl.: A47J 31/42, A47J 42/50

(54) **Coffee bean packaging cartridge and coffee beverage system including the same**
Kaffeebohnenverpackungsvorrichtung und Kaffeegetränksystem damit
Cartouche de conditionnement de grains de café et système de boisson au café l'incluant

(30) Priority: 22.02.2010 NL 2004274; 17.08.2010 NL 2005238; 26.08.2010 NL 2005278; 26.08.2010 NL 2005280; 17.02.2010 WO PCT/NL2010/050077
(43) Date of publication of application: 25.01.2012
(73) Proprietor: Koninklijke Douwe Egberts B.V., 3532 AD Utrecht (NL); Koninklijke Philips N.V., 5656 AE Eindhoven (NL)
(72) Inventor: van Os, Ivo, 3811 MB, Amersfoort (NL); de Graaff, Gerbrand, Kristiaan, 2182 DN, Hillegom (NL); Moorman, Christiaan, Johannes, Maria, 5066 MJ, Moergestel (NL); Dillon, Charles, Kevin, Bottisham, Cambridgeshire CB25 9BE (GB)
(74) Representative: Jansen, Cornelis Marinus

(56) References cited:
- EP-A1- 1 700 549
- EP-A1- 2 067 421
- EP-A2- 0 804 894
- WO-A1-01/48711
- US-A- 5 386 944

## Description

The invention relates to a coffee beverage system including a coffee bean packaging cartridge. In particular the invention relates to a system for preparing coffee wherein the coffee bean packaging cartridge is arranged for holding and supplying multiple servings of coffee beans and wherein the system comprises a grinder for grinding the beans and a brewing device for brewing coffee on the basis of grinded coffee obtained by means of the grinder.

It is known to pack roasted coffee beans in containers that can be connected to coffee brewing apparatus that include a grinding mechanism. For such systems to be efficient the containers have often been designed to hold between 1 kg and 3 kg of coffee beans.

The patent application EP 0 804 894 A2 discloses such a coffee dispensing and brewing apparatus that comprises components for dispensing a predetermined amount of coffee to a brew basket, the components including a hopper (container) for holding a supply of coffee beans and an auger device communicating with the hopper for portioning coffee beans in a predetermined amount to a coffee grinder. The apparatus further includes a brew basket holding assembly for releasably holding the brew basket in a region adjacent a passageway to the grinder and a hot water making and delivery system for distributing a predetermined volume of hot water from a hot water holding tank to the region during a brewing cycle. The grinder motor has a right angle power transmission that couples the motor to the grinder with the motor being located below the grinder and adjacent a vertical side of the holding tank.

For such existing coffee beverage systems, the coffee supplier wishes that it should be highly likely, that the cartridge cooperating with the coffee brewing apparatus marketed by the supplier and on which her name is printed, carries the coffee beans of the supplier. Furthermore, it would be advantageous for the supplier to be able to supply coffee beans under another label for refilling the cartridge cooperating with the coffee brewing apparatus.

Accordingly, it is an object of the present invention to provide a system for preparing coffee beverages of the above referred to kind, which enables both these options. In a more general sense it is thereby an object of the invention to overcome or ameliorate at least one of the disadvantages of the prior art. It is also an object of the present invention to provide alternative structures which may be less cumbersome in assembly and operation and which moreover can be made relatively inexpensively.

Unless stated otherwise, in the description and claims coffee beans are understood to be burnt/roasted coffee beans. Coffee beans in the description and claims may be understood to cover also fragmented coffee beans, that is, coffee bean fragments, which coffee bean fragments are still to be grinded for extracting desired coffee beverage. The coffee beans are for instance broken, before they are packaged. In an embodiment, at least a part of the coffee beans in the coffee bean package is divided into about thirty or less, in particular about fifteen or less, more particularly about ten fragments or less. One coffee bean fragment then comprises for instance one-thirtieth part, in particular one-fifteenth part, more particularly one-tenth part or more of a coffee bean. For instance, the coffee bean fragments comprise a half or a quarter of a coffee bean. An advantage of the use of coffee bean fragments compared with whole coffee beans can be that coffee bean fragments can be supplied to the grinder relatively simply and/or that the package can be closed off relatively simply. This is because the coffee bean fragments are relatively small and hence can slide relatively easily through openings in the package and the apparatus and/or will block the coffee bean outlet and/or closing means less easily. As the coffee beans may beforehand have been divided into fragments, though not grinded, in the meantime comparatively more bean surface can come into contact with any ambient air than would be case with whole coffee beans. On the other hand, less bean surface will come into contact with air than would be the case with grinded coffee, so that coffee bean fragments can be preserved better than grinded coffee beans. Only just before preparation of the coffee beverage are the coffee bean fragments grinded for obtaining coffee beverage. In this description, therefore, coffee bean may also be understood to include a fragmented coffee bean, that is, which is still to be grinded for preparing the desired coffee beverage.

According to the invention, a system, a cartridge, a coffee brewing apparatus and methods are provided according to the independent claims. Favourable embodiments are defined by the dependent claims. According to one aspect of the invention there is provided a coffee beverage system, according to claim 1, including a first coffee bean packaging cartridge and a coffee brewing apparatus wherein the first coffee bean packaging cartridge can be removable connected to the coffee brewing apparatus. The first coffee bean packaging cartridge, which preferably is non refillable with coffee beans, is arranged for holding and supplying multiple servings of coffee beans. It includes a container comprising an interior volume and at least one exit opening defining a coffee bean outlet, the interior volume holding coffee beans and transportation means adapted for enabling transportation of the coffee beans from the interior volume towards the exit opening of the first cartridge. The coffee apparatus comprises an entrance opening for receiving coffee beans which are transported with the aid of the transportation means towards the exit opening of the first cartridge, a grinder for grinding coffee beans which have entered the coffee apparatus via the entrance opening and a brewing device for brewing coffee on the basis of grinded coffee obtained by means of the grinder. The transportation means of the first cartridge comprise a part which is movable relative to a main body of the first cartridge for transporting the coffee beans towards the exit opening of the first cartridge upon driving of said transportation means. The coffee brewing apparatus is provided with a motor and a vertically extending drive shaft wherein said drive shaft is releasable connected with the transportation means of the first cartridge for driving and thereby moving the transportation means of the first cartridge upon rotation of the drive shaft by means of the motor means for transporting the coffee beans towards the exit opening of the first cartridge. The first cartridge is arranged such that, if the drive shaft is connected with the transportation means, after a first predetermined number of revolutions of the drive shaft the transportation means of the first cartridge is automatically disabled for transporting the coffee beans towards the exit opening. The system is further provided with a second coffee bean cartridge which can also be removable connected to the coffee brewing apparatus. The second coffee bean cartridge, which preferably is refillable with coffee beans, is arranged for being filled with and holding and supplying multiple servings of coffee beans. The second coffee beans cartridge includes a container comprising an interior volume and at least one exit opening defining a coffee bean outlet, the interior volume being arranged for holding coffee beans and transportation means adapted for enabling transportation of the coffee beans from the interior volume towards the exit opening of the second cartridge. The second cartridge is adapted to the coffee apparatus so that, if the second cartridge is connected to the coffee apparatus, coffee beans which are transported with the aid of the transportation means of the second cartridge towards the exit opening of the second cartridge can be received by the coffee apparatus via the entrance opening for preparing coffee. The second cartridge is arranged such that the transportation means of the second cartridge will not be disabled upon a predetermined number of revolutions of the drive shaft or will only be disabled after a second predetermined number of revolutions of the drive shaft wherein the second predetermined number of revolutions is greater than the first predetermined number of revolutions.

With the coffee beverage system according to the present invention, the first coffee bean packaging cartridge, which may be disposable, may comprise the coffee beans of the supplier. The first coffee bean packaging cartridge may be designed to be non-refillable or be refillable only a limited number of times. By automatically disabling the transportation means of the first cartridge for transporting the coffee beans towards the exit opening thereof, the first coffee bean packaging cartridge is made useless after a predetermined number of coffee servings, which preferably corresponds to the amount of coffee beans present in the interior volume of the first coffee bean packaging cartridge or is slightly superior. After the predetermined number of coffee servings, the first coffee bean packaging cartridge should be replaced with another coffee bean packaging cartridge. In this way, there is a strong guarantee that the first coffee bean packaging cartridge comprises the coffee beans of the supplier. A further possible advantage may be that the supplier can give a guarantee that there are no or very few stones in the coffee bean packaging cartridge. Often stones with a size between a millimeter and a centimeter are present in bags filled with coffee beans. If coffee beans of such bags are used, the stones therein may cause damages to the grinder, resulting in tear thereof, the risk of a broken grinder and a deterioration of the coffee quality. This may be avoided by means of an X-ray destoner in the production line. So, the supplier providing such "destoned" coffee beans is enabled to give a guarantee that there are no or very few stones in the cartridge in case that the cartridge is non-refillable.

The second coffee bean cartridge may comprise the coffee beans of the supplier marketed under another label. It may be designed to be refillable, either a considerable number of times or an unlimited number of times. When the first cartridge is mounted to the coffee brewing apparatus of the system, the system may be arranged for rotating the vertically extending drive shaft with the motor means thereby driving and moving the transportation means of the first cartridge upon for transporting the coffee beans towards the exit opening of the first cartridge, grinding coffee beans which have entered the coffee apparatus via the entrance opening thereof and brewing coffee on the basis of grinded coffee. The first cartridge may be arranged such that, if the drive shaft is connected with the transportation means, after a first predetermined number of revolutions of the drive shaft in a direction other than, or other than used for driving the transportations means of the first cartridge the transportation means of the first cartridge is automatically disabled for transporting the coffee beans towards the exit opening. The drive shaft may be rotated in a direction other than, or other than used for driving the transportations means of the first cartridge each time after transporting the coffee beans for a serving of coffee towards the exit opening of the first cartridge.

Alternatively, the first cartridge may be arranged such that, if the drive shaft is connected with the transportation means after a first predetermined number of revolutions of the drive shaft for driving the transportations means of the first cartridge the transportation means of the first cartridge is automatically disabled for transporting the coffee beans towards the exit opening.

The system may be arranged for executing the automatic disabling of the transportation means of the first cartridge for transporting the coffee beans towards the exit opening by means of bringing it into a motor stall condition or by means of disengagement of a mechanical connection, so that the rotation of the drive shaft does not result in driving the transmission means or a part of the transmission means.

The movable part of the transportation means of the first cartridge may include a disk element, for example an impellor including a bottom and a plurality of vanes, which rotates upon rotation of the drive shaft. The disk element may include a recess wherein the disk element rotates upon rotation of the drive shaft due to an engagement of drive means with the recess.

According to an embodiment, the drive means comprise the drive shaft and a drive bush, mountable on the drive shaft as well as a nut mountable on the drive bush. The engagement of the drive means and the recess may be by means of an engagement of the nut and a wall of the recess by means of one or more protrusions engaging with one or more corresponding slots. Revolutions of the drive shaft in a direction for driving the transportation means cause the rotation the drive bush and the nut mounted thereto and the corresponding rotation of the disk element, resulting in the transportation of the coffee beans towards the exit opening. Revolutions of the drive shaft in a direction other than, or other than used for driving the transportation means of the first cartridge cause the rotation of the nut with respect the drive bush. Since, the nut is connected to the drive bush by means of screw thread, such revolutions result in nut moving upwards or downwards over the drive bush. After the first predetermined revolutions in the direction other than, or other than used for driving the transportation means the nut has moved so far that it disengages from the wall of the recess and driving the transportation means by means of the drive shaft becomes impossible.

According to an alternative embodiment, the drive means comprise a drive bush mountable on the drive shaft. The engagement between the drive means and the disk element is by means an engagement of the drive bush and the wall of the recess by one or more snap fingers engaging with one or more corresponding slots. Furthermore, the drive bush is engaged with the wall by means of screw thread. In case of revolutions of the drive shaft and thereby the drive bush in the direction of driving the transportation means, the snap finger-slot engagement between the drive bush and the wall of the recess of the disk element results in the rotation of the disk element and the transportation of the coffee beans towards the exit opening of the first cartridge. Rotation of the drive shaft in the direction other than, or other than used for driving the transportation means results in the drive bush going upwards with respect to the disk element so that after the first predetermined number of revolutions of the drive shaft the drive bush disengages from the drive shaft and driving the transportation means by means of the drive shaft becomes impossible.

The transportation means of the second cartridge may comprise a downwardly extending bottom wall such as a funnel of the container for transporting the coffee beans towards the exit opening of the second cartridge under the influence of gravity.

Alternatively or additionally, the transportation means of the second cartridge comprises a part which is movable relative to a main body of the second cartridge for transporting the coffee beans towards the exit opening of the second cartridge upon driving of said transportation means. The transportation means may be releasable connectable with the vertically extending drive shaft of the coffee brewing apparatus. Upon rotation of the drive shaft by means of the motor the transportation means of the cartridge are driven and thereby moved for transporting the coffee beans towards the exit opening of the second cartridge.

The movable part of the transportation means of the second cartridge may include a disk element, which rotates upon rotation of the drive shaft. The disk element may be an impellor including a bottom and a plurality of vanes. It may include a recess wherein the disk element rotates upon rotation of the drive shaft due to an engagement of drive means with a wall of the recess.

The second cartridge may be arranged such that, if the drive shaft is connected with the transportation means, the transportation means will not be disabled upon a predetermined number of revolutions of the drive shaft in a direction other than, or other than used for driving the transportations means of the second cartridge or will only be disabled after a second predetermined number of revolutions of the drive shaft wherein the second predetermined number of revolutions is greater than the first predetermined number of revolutions.

The system may be further provided with a metering chamber for receiving coffee beans which are transported with the aid of the transportation means into the metering chamber. The metering chamber may be arranged for receiving a portion of coffee beans corresponding to a dosed amount of coffee beans which is preferably necessary for preparing a single serving of coffee beverage.

The metering chamber may be divided in a first chamber portion which is part of the first or second cartridge and a second chamber portion which is part of the coffee brewing apparatus. The second chamber portion may comprise a bottom portion which forms a part of the grinder, said bottom portion being arranged in the coffee brewing apparatus for rotating around a first axis extending in a vertical direction. The system may be arranged such that upon activation of the grinder the bottom portion is rotating around the vertical axis for transporting the coffee beans from the metering chamber into the grinder and for grinding the coffee beans.

The division of the metering chamber over the cartridge and the brewing apparatus enables to provide a compact coffee beverage system. The use of a bottom portion of the metering chamber, which is part of the grinder and which rotates for emptying the metering chamber also results in a decreased height of the system compared to the alternative option of providing a separate bottom plate of the metering chamber and a separate grinder.

The coffee bean packaging cartridge may comprise closing means for closing the coffee bean outlet when the coffee bean packaging cartridge is not connected to the coffee brewing apparatus. In this way it is avoided that coffee beans fall out of the coffee bean packaging cartridge when it is not connected to the coffee brewing apparatus.

The closing means may be configured for opening the coffee bean outlet when the coffee bean packaging cartridge is connected to the coffee brewing apparatus.

The closing means may comprise a closure member at the bottom side of the container comprising the coffee bean outlet and a rotatable closing disk having an opening. In order to connect the first and/or second cartridge to the coffee brewing apparatus the opening of the rotatable closing disk may be brought in a position aligned with the coffee bean outlet.

The closure member may comprise a pair of fletching arms and the closure disk may comprise a detent, which in the closed position is caught behind the fletching arms.

The exit opening may be associated with a removable sealing element sealing the interior volume prior to activation of the first and/or cartridge wherein preferably said sealing element prevents gasses to escape from the cartridge. The beverage system may comprise means for disrupting and displacing the sealing element, preferably when the cartridge is connected to the brewing apparatus for the first time. The sealing element may be a sealing membrane.

The coffee brewing apparatus may comprise connection means for the removable connection to the first or second cartridge. The connection means may comprise a recess at an upper side of the coffee brewing apparatus, the recess being surrounded by a side wall and being configured for receiving a corresponding part protruding from a lower side of the coffee bean packaging cartridge. The side wall may protrude from the upper side of the coffee brewing apparatus and be covered by a housing.

The coffee brewing apparatus may comprise control means for rotating the vertically extending drive shaft with the motor means thereby driving and moving the transportation means for transporting the coffee beans towards the exit opening of the first and/or second cartridge, grinding coffee beans which have entered the coffee apparatus via the entrance opening thereof and brewing coffee based on the grinded coffee and heated water heated by a heating device of the coffee brewing apparatus.

The control means may be furthermore configured for rotating the drive shaft with the motor means in a direction other than, or other than used for driving the transportations means of the first and/or second cartridge, after the filling of the metering chamber.

The control means may be configured such that, in use, the transportation means is driven for filling the metering chamber with coffee beans and that after completion thereof the grinding device is activated for emptying the metering chamber and for grinding coffee beans which were collected in the metering chamber during the first step. The transportation means may be driven longer than is required for filling the metering chamber with coffee beans and/or the grinding device may be activated longer than is required for emptying or at least substantially completely emptying the metering chamber and for grinding all the coffee beans which were collected in the metering chamber during the filling step.

Further advantageous aspects of the invention will become clear from the appended description of preferred embodiments.

The invention will now be described in reference to the accompanying drawings, in which:
Figure 1 shows a perspective view of an embodiment of the coffee brewing system according to the present invention with a coffee bean cartridge mounted to the coffee brewing apparatus;
Figure 2 shows a perspective view of an embodiment of the coffee brewing system according to the present invention without a coffee bean cartridge mounted to the coffee brewing apparatus;
Figure 3A shows a cross sectional view of a part of the coffee brewing system according to figure 1 in perspective when using a coffee bean packaging cartridge of a first type with anti-refill mechanism;
Figure 3B shows a cross sectional view of a part of the coffee brewing system according to figure 1 in perspective when using a coffee bean cartridge of a second type without anti-refill mechanism;
Figure 3C shows a cross sectional view of the grinder used in the coffee brewing system according to figure 1 in perspective;
Figure 3D shows a cross sectional view of the grinder used in the coffee brewing system according to figure 1;
Figure 4A shows a perspective detail view of the upper part of the coffee brewing apparatus of figure 2;
Figure 4B shows a perspective detail view of the upper part of the coffee brewing apparatus of figure 2 with a closing plate in open position;
Figure 5A and 5B are two isometric exploded views of an impellor used in the coffee bean packaging cartridge of the first type together with driving means and a drive shaft coupling end;
Figure 5C shows a perspective bottom view of the impellor used in the coffee bean packaging cartridge of the first type;
Figure 5D shows a perspective view of the drive means used for driving the impellor used in the coffee bean packaging cartridge of the first type;
Figures 5E and 5F show a perspective detail view of the lower part of the drive means at the time of reaching a final position;
Figure 5G shows a cross sectional top view with the drive means in their initial position;
Figure 5H shows a cross sectional front view with the drive means in their initial position;
Figure 5I shows a cross sectional top view with the drive means in their final position;
Figure 5J shows a cross sectional front view with the drive means in their final position;
Figure 6A is an exploded isometric view of a coffee bean packaging cartridge of the first type according to an embodiment of the invention;
Figures 6B and 6C show two different perspective views of the coffee bean packaging cartridge shown in figure 6A;
Figure 7A and 7B are two isometric exploded views of an impellor used in the coffee bean cartridge of the second type together with a drive shaft coupling end;
Figure 8 is an exploded isometric view of a coffee bean packaging cartridge of the second type according to an embodiment of the invention;
Figure 9A is a detailed exploded isometric view of the bottom part of the coffee bean packaging cartridge of Figure 6A;
Figure 9B is a detailed exploded view of the bottom part of Figure 9A as seen in an opposite direction;
Figure 9C is a perspective view of a closing plate of the bottom part shown in figures 9A and 9B;
Figure 10 is a cross-sectional detail of the assembled bottom part; and
Figure 11 is a bottom perspective detail of the bottom part of Figure 9B with a delatching protrusion of the coffee brewing apparatus;
Figures 12A-12C show the drive means and impellor of a coffee bean packaging cartridge of the first type according to a further embodiment of the invention;
Figure 12D is a cross-sectional detail of the elements of figures 12A-12C mounted together;
Figure 13A-13D serve to explain the functionality of the elements shown in figures 12A-12C.
Figures 14A-14B show the drive means and impellor of a coffee bean cartridge of the second type according to a further embodiment of the invention.

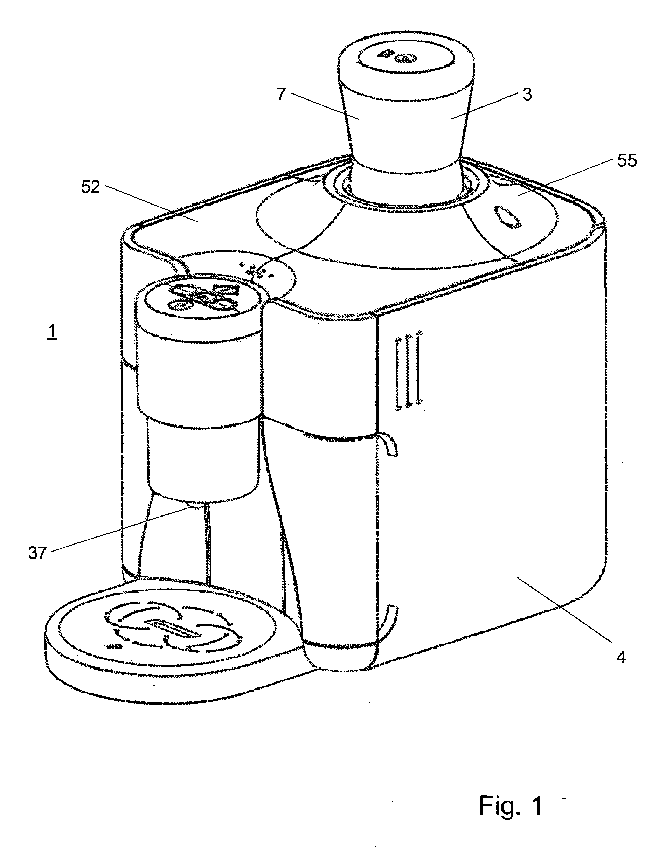

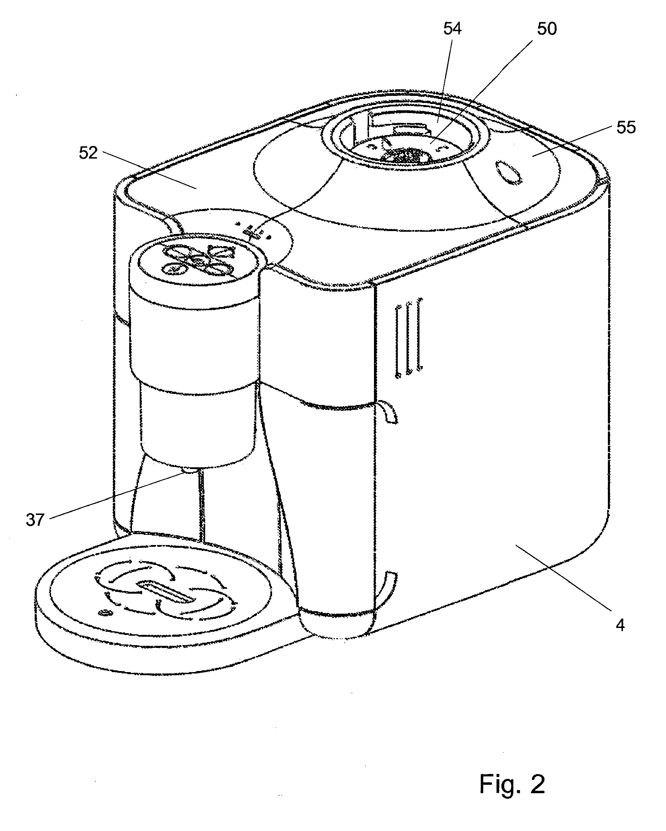

In Figure 1 a system 1 for preparing coffee beverages is shown. The system 1 includes a coffee bean cartridge 3 and a coffee brewing apparatus 4. The coffee bean cartridge may be of a first type, i.e. a coffee bean packaging cartridge that is not refillable or may only be refillable a very limited number of times or of a second type, i.e. a coffee bean cartridge that is either refillable a number of times higher than the number of times that the coffee bean cartridge of the first type may be refilled or it is refillable an unlimited number of times. The coffee bean cartridge 3 is removably connected to the coffee brewing apparatus 4. Figure 2 shows the coffee brewing apparatus without the coffee bean cartridge 3 mounted thereon. Both, the coffee bean packaging cartridge 3 of the first and second type comprise a container 7 having an interior volume for containing coffee beans and an exit opening. These coffee beans are roasted and include generally roasted half beans. Preferably, the coffee beans cartridge 3 is closed airtight and/or under vacuum before it is placed on the coffee brewing apparatus 4. Also the coffee bean cartridge 3 can be in the form of a disposable packaging, so that it can be thrown away after it has been emptied.

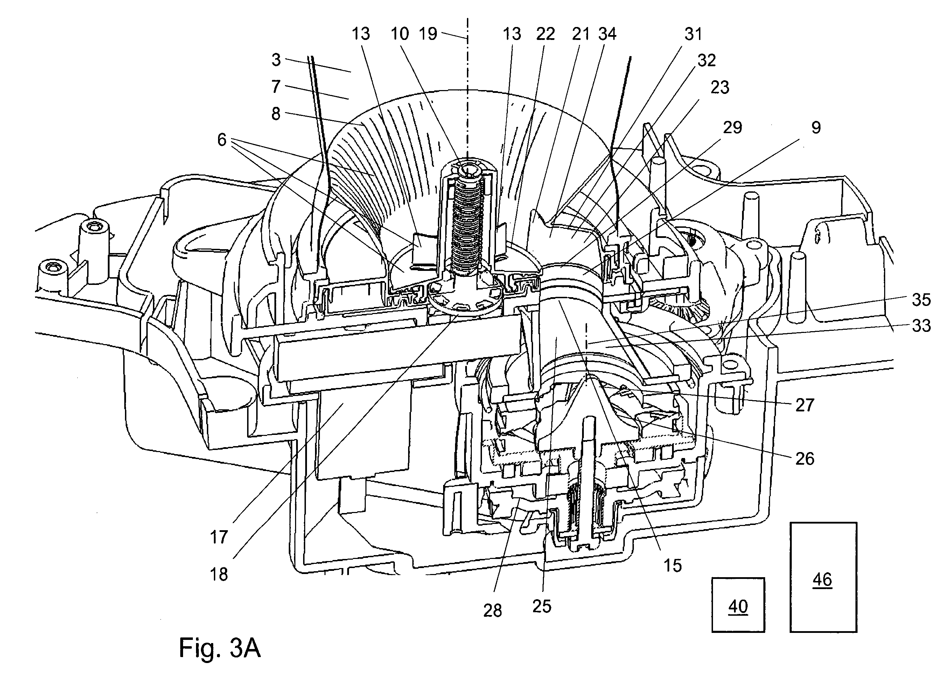

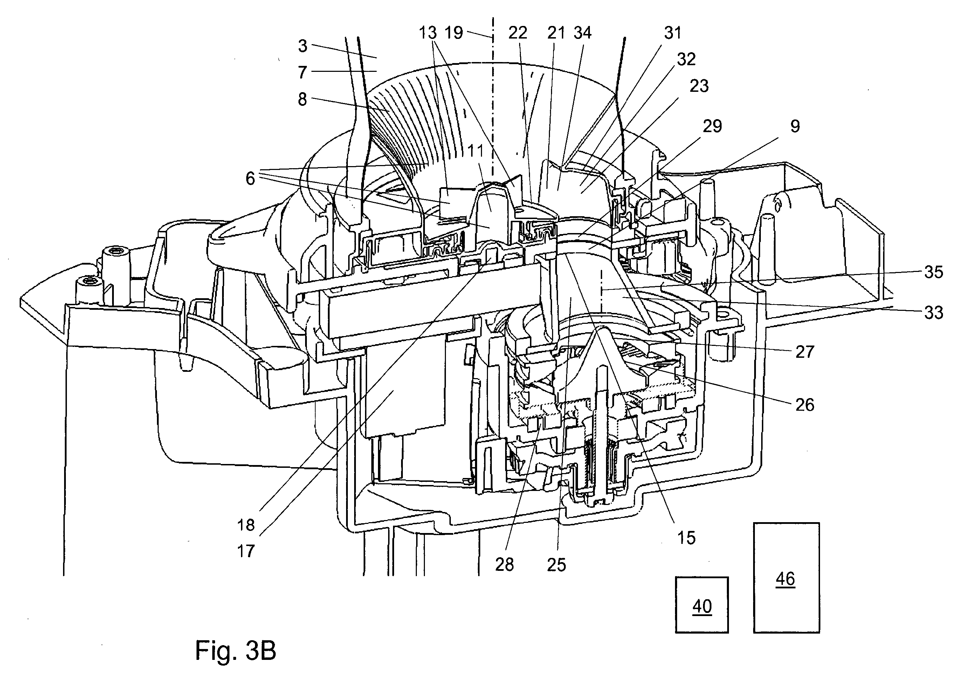

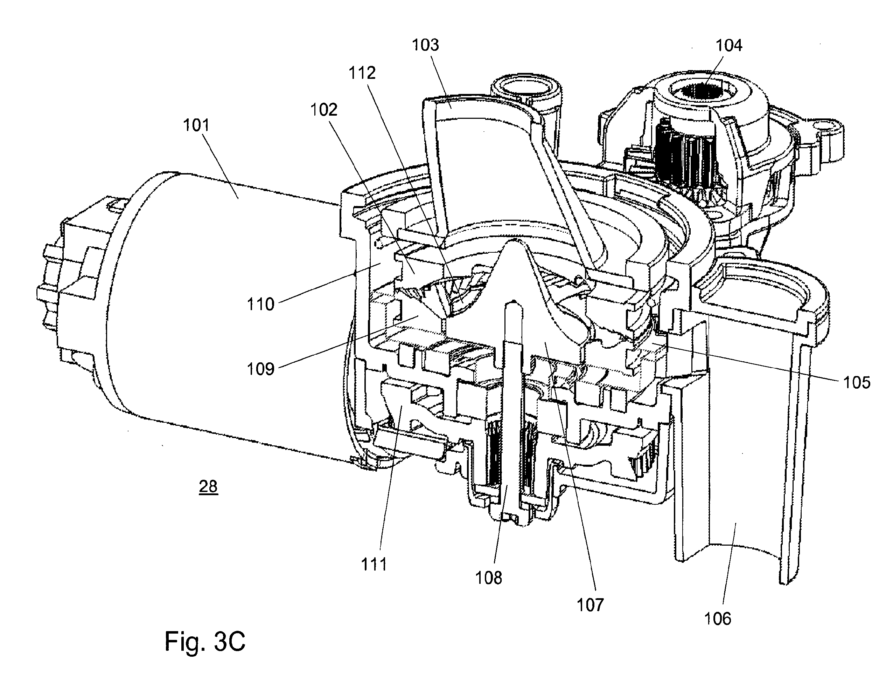

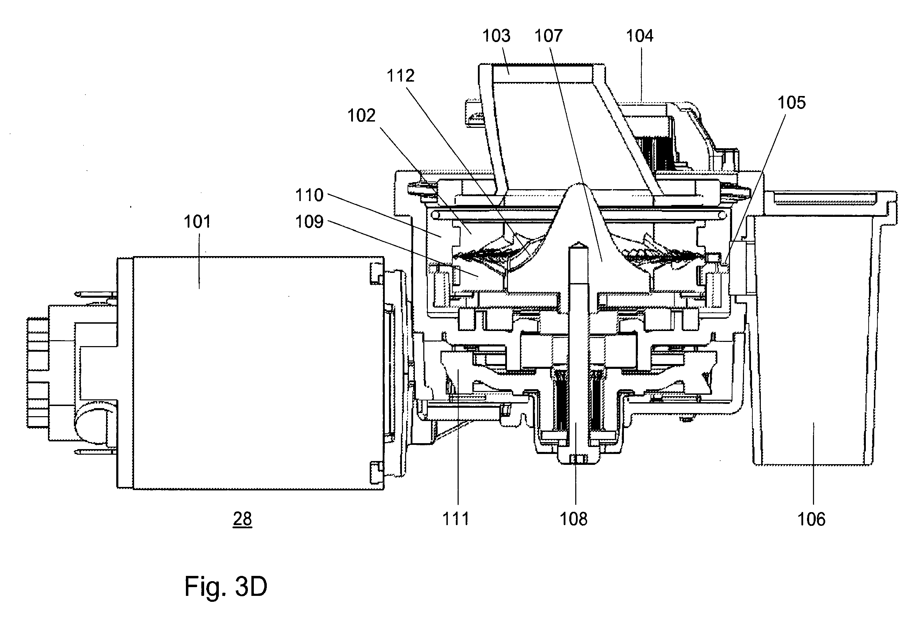

Referring now to figures 3A and 3B, the coffee beverage system 1 will be described in more detail. Figure 3A shows a cartridge of a first type with an anti-refill mechanism, to be described in more detail herein after, also referred to in this description as the first cartridge or the first coffee bean packaging cartridge. Figure 3B shows a cartridge of a second type without anti-refill mechanism. also referred to in this description as the second cartridge or the second coffee bean cartridge Most features of the first and second cartridges are the same, except for the impellor and the driving means thereof, as will be discussed herein after. In both cases the cartridge comprises transportation means 6 for enabling transportation of the coffee beans from the interior volume of the container 7 (only partially visible in figures 3 and 3B) towards the exit opening 29 of the cartridge 3. The coffee apparatus is provided with an entrance opening 9 for receiving coffee beans which are transported by means of the transportation means towards the exit opening 29. The exit opening 29 extends above the coffee bean entrance opening 9 of the coffee brewing apparatus 4.

A lower part of the container 7 comprises a funnel 8 which forms part of the transportation means 6. The beans of the coffee bean packaging cartridge 3 are guided by means of the funnel 8 towards the exit opening 29 of the cartridge. In case of the first cartridge with anti-refill mechanism the transportation means comprise a disk element (impellor) of a first type 10, also referred to in this description as first impellor, having several flexible vanes 13. In case of the cartridge without anti-refill mechanism the transportation means comprise a disk element (impellor) of a second type 11, also referred to in this description as second impellor, which again comprises several flexible vanes 13. The reason for using different impellors lies in the need to use different drive means for driving the impellor in case of anti-refill and without anti-refill mechanism, as will be discussed herein after. Upon driving the movable part (impellor) of the transportation means, in this example by rotating the impellor around a second axes 19 extending in a vertical direction, the coffee beans are transported towards the exit opening 29.

The system further comprises a metering chamber 15. The metering chamber is divided in a first chamber portion 23 which is part of the cartridge and a second chamber portion 25 which is part of the coffee brewing apparatus. The first chamber portion is located above the second chamber portion. The first chamber portion comprises the exit opening 29 of the cartridge and the second chamber portion comprises the entrance opening of the coffee apparatus. The first chamber portion is provided with an upstanding side wall 32 comprising an inlet opening 21 for letting pass coffee beans into the metering chamber which coffee beans are transported by means of the transportations means towards the exit opening of the cartridge. The transportation means are thus configured for transporting the coffee beans towards and into the metering chamber 15 of the coffee beverage system 1 upon driving of the transportation means. This driving is performed by means of a first motor 17 of the coffee apparatus, driving a drive shaft 18 of the coffee apparatus extending along a vertical axis 19. Due to the driving, the impellor 10/11 comprising the vanes 13 rotates around the second vertical axis 19. In this way, the coffee beans are driven in a horizontal direction to the inlet opening 21 of the metering chamber 15. The cartridge comprises a small trickle through edge 22 to avoid the uncontrolled entering of coffee beans in the metering chamber 15 when the impellor 10/11 is not rotating. The metering chamber 15 comprises the first chamber portion 23 in the cartridge 3 and the second chamber portion 25 in the brewing apparatus 4. The bottom 26 of the metering chamber at least comprises a bottom portion 27 which is part of a grinder 28 for grinding coffee beans. The coffee beans leave the fist chamber portion 23 and thereby the cartridge 3 via the exit opening 29 of the cartridge 3 and enter the second chamber portion 25 and thereby the coffee brewing apparatus via the entrance opening 9. The size of the metering chamber is limited by a top wall 31, the bottom 26 and an upstanding side wall 32. The upstanding side wall 32 comprises the upstanding side wall 34 of the first chamber portion and an upstanding side wall 33 of the second chamber portion. The second chamber portion comprises about 100- X% of the volume of the metering chamber and the first chamber portion comprises about X% of the volume of the metering chamber wherein X is in the range of 2-50, preferably in the range of 4-30, more preferably in the range of 6-15.

The bottom part 27 of the metering chamber has a conical shape such that the bottom portion extends downwardly in a direction extending perpendicular to and away from a vertical axis 35. The grinder 28 in this embodiment is positioned centrically with respect to the second chamber portion 25. Referring now to figures 3C and 3D, the grinder will be described in more detail. The grinder comprises a second motor (grinder drive motor) 101 and an upper grinding disk/wheel 102, which may be ceramic or steel. The upper grinding disk/wheel is rotationally fixed in its position. Furthermore, the second chamber 103 of the metering chamber is shown (referred to by reference 25 in figure 3A and 3B), which works as dosing funnel. The grinder furthermore comprises a manual adjustment lock 104 to adjust the grind fineness setting by the consumer. The upper grinding disk 102 is moved up or down in respect to the lower grinding disk/wheel 109 when this key is turned. When the adjustment lock is operated, the upper grinding disk moves up and down and the lower grinding disk stays in place. In this way the size of the grind at the exit of the grinding disks, i.e. where they almost touch the outside of the grinder, is determined. The grinder furthermore comprises an exit location 105 for grinded coffee out of the circular transport channel 110 into the grinded coffee chute 106. The grinded coffee chute is a funnel pointing downwards into the brewing device 46 of the coffee brewing apparatus, which is open on the top and placed exactly below this chute when grinding. A rotating drive cone 107 (referred to as bottom part with conical shape 27 of the metering chamber in figures 3A and 3B) is fixed on the main drive shaft 108. This cone ensures the movement and guidance of the beans out of the metering chamber into the grinding section consisting of the upper grinding disk 102 and the lower grinding disk 109, which may be ceramic or steel. The upper grinding disk 102 and the lower grinding disk 109 have a suitable milled shape for grinding the coffee beans, as is well known in the art. The main drive shaft drives the lower grinding disk 109 and the rotating drive cone 107. There is formed a circular transport channel 110, which transports the grinded coffee exiting out of the slit between upper and lower grinding disk to the exit location 105. The shape of the channel results in a "no contamination" grinder, wherein virtually no coffee beans/grinded coffee remains after finishing the grinding. Furthermore, the grinder comprises a motor transmission/gear 111 and a cone protrusion 112 to force the beans between the grinder disks.

The lower grinding disk 109 extends around rotating drive cone 107 and the upper grinding disk 102 extends above the lower grinder disk 109. The grinder is rotationally driven by motor 101 resulting in the rotation of the drive cone 107 and the lower grinding disk 109. Due to the shape of the cone protrusion 112 upon driving the drive cone 107 and the lower grinding disk coffee beans are moved in an outwardly extending radial direction between the lower grinding disk 109 and the upper grinding disk 102. Because a vertical distance between the lower grinding disk 109 and the upper grinding disk 102 decreases in the outwardly extending radial direction the beans are crunched and cut into grinded coffee.

As explained, grinder 28 supplies grinded coffee to a coffee brewing device 46 (schematically shown in figures 3A and 3B) of the coffee apparatus. The coffee brewing device is arranged to receive a supply of water to extract a coffee beverage from the grinded coffee. The coffee beverage is discharged from a coffee beverage exit 37 from the coffee brewing apparatus into a cup or like household receptacle. A water supply can be arranged to supply water to the coffee brewing device under pressure for espresso type coffee beverages or may provide a drip feed to the extraction system formed by coffee brewing device.

Before operating the coffee beverage system, the user has to connect the coffee bean cartridge 3 to the coffee brewing apparatus 4.

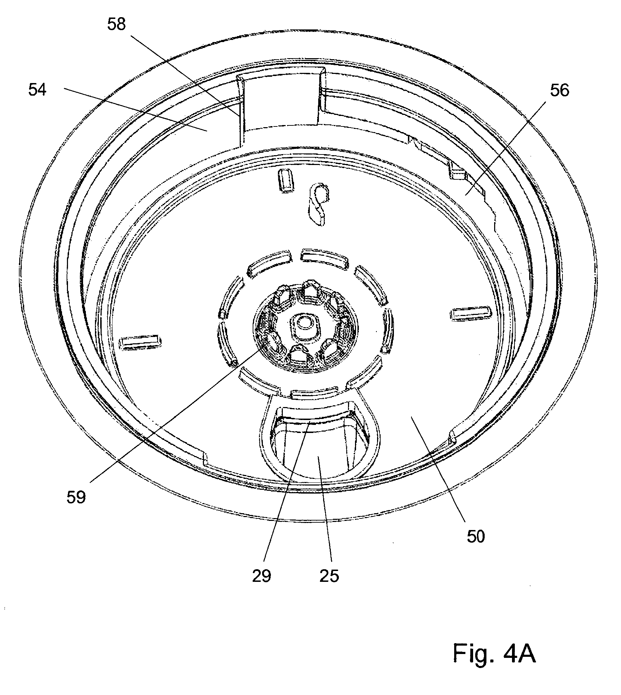

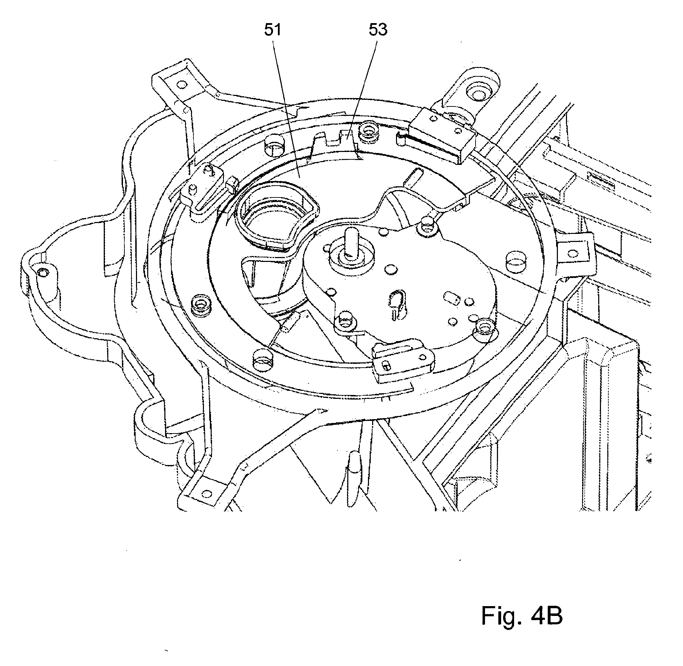

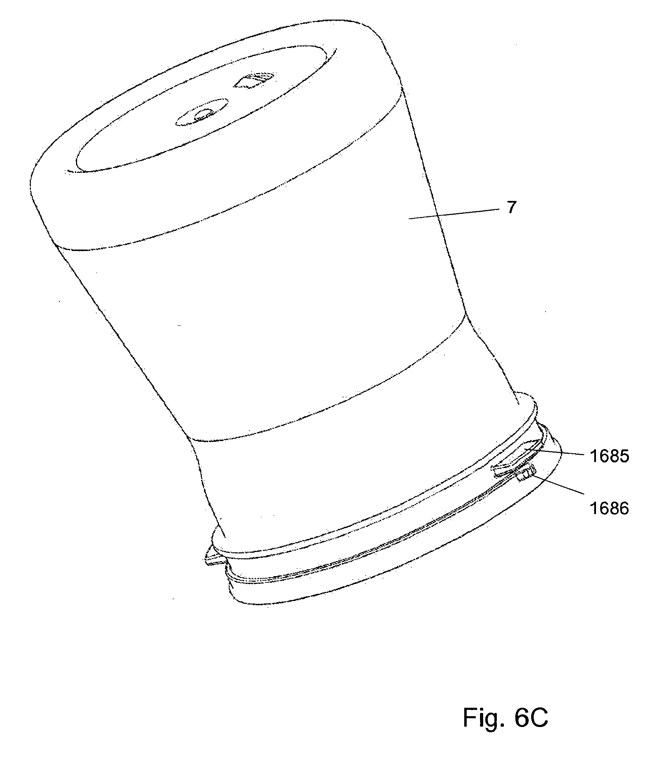

Referring now to figure 4A, the connection means for connecting the coffee bean cartridge 3 to the coffee brewing apparatus comprise a recess 50 at an upper side 52 of the coffee brewing apparatus 4. The recess 50 is surrounded by a side wall 54 protruding from the upper side of the coffee brewing apparatus 4. The user should place the corresponding part of the first/second cartridge, at a lower side of the coffee bean cartridge into the recess. The bayonet elements to be described later of the cartridges should be placed in the corresponding openings 58 in the side wall 54 of the recess 50. The user should then rotate the cartridge over 50 degrees until reaching the blocking elements 56 for impeding a further rotation of the coffee bean packaging cartridge. At this position the exit opening 29 of the first chamber portion 23 is aligned with the coffee inlet 9 of the second chamber portion 25. When the cartridge 3 is removed from the coffee brewing apparatus, the second chamber portion 25 in the appliance is closed by means of an appliance closing plate 51(figure 4B) The appliance closing plate is being driven by a protrusion 1686 (figure 6C) on the neck of the cartridge which slots into a keyhole 53 on the appliance closing plate as the cartridge is being placed into the openings 58 in the side wall 54 of the recess 50. As the user rotates the cartridge over a 50 degrees angle during placement the closing disk in the consumable and the closing plate in the appliance are opened, simultaneously.

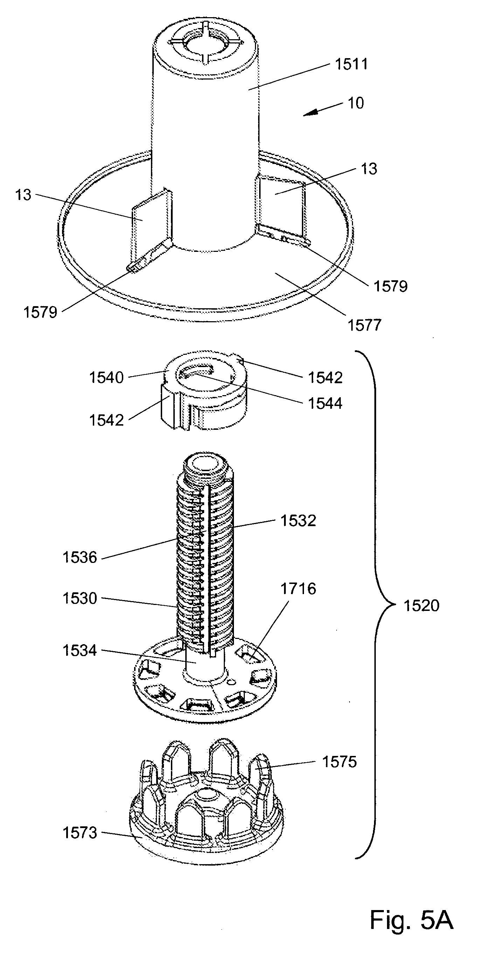

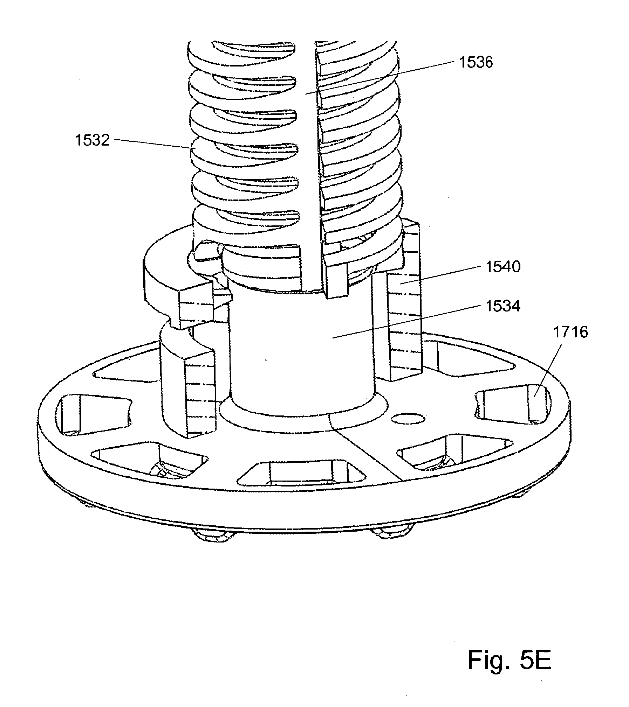

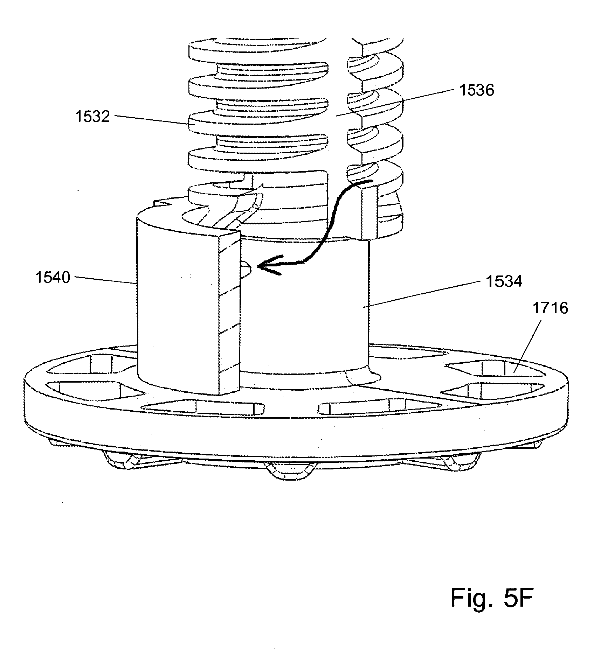

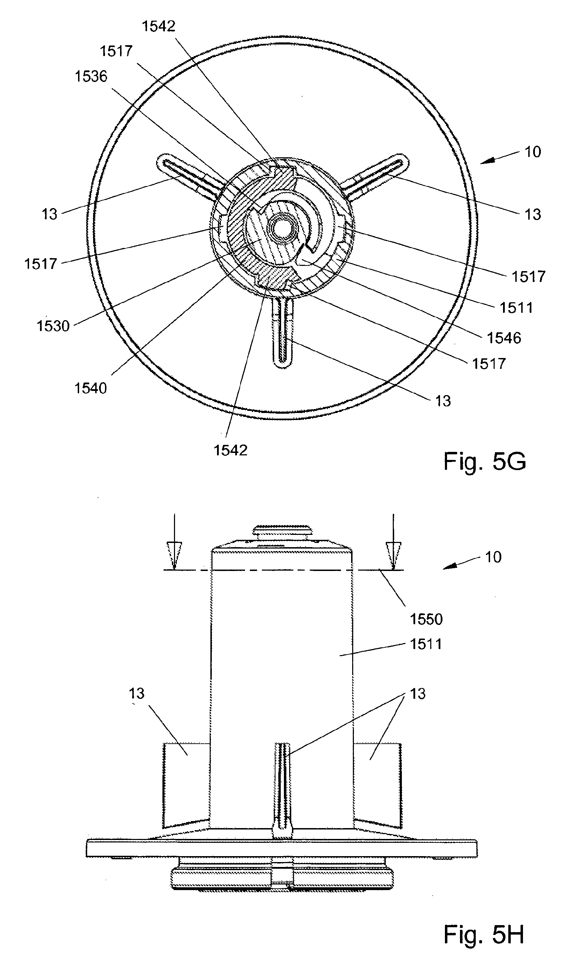

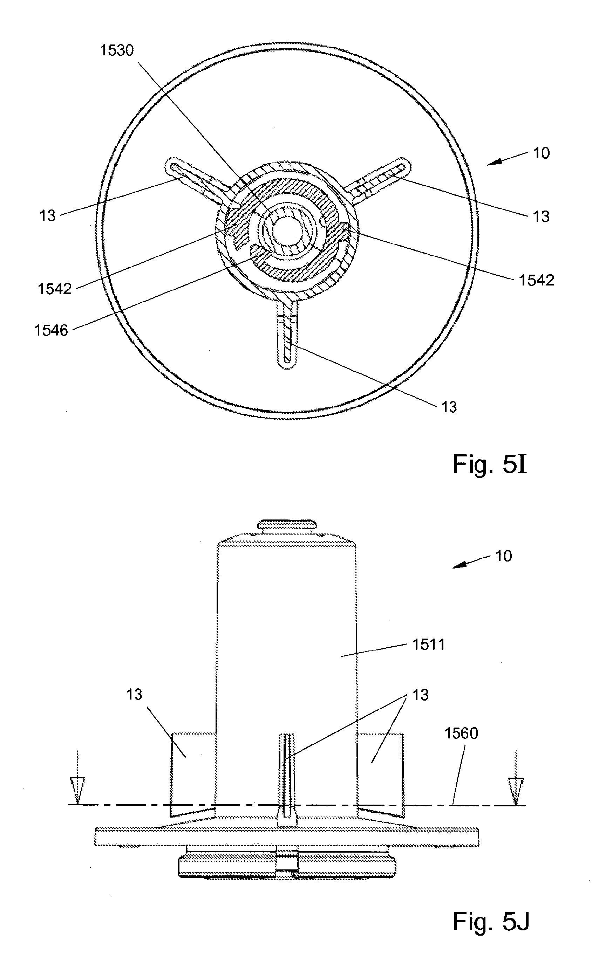

An example of a first impellor 10 and its corresponding drive means 1520 is shown in more detail in Figures 5A-5J. To prevent the impellor 10 to get jammed by coffee beans that become locked between the perimeter aperture and radially extending vanes 13, such vanes 13 are preferably made from a resilient material. It is also possible to make the entire impellor 10 from a yieldable resilient material. As illustrated in Figure 5A the vanes 13 do not extend to the perimeter edge of the impellor 10, which may prevent beans from becoming jammed between the vanes 13 and the perimeter aperture. As indicated hereinabove the vanes may also be of a flexible material and to provide more flexibility to the vanes the vanes are conveniently also unattached to the impellor base 1577 (bottom), by leaving a gap 1579.

The first impellor 10 has a hollow hub portion 1511. The drive means 1520 are inserted in the recess in the interior of the hollow hub portion 1511. The drive means 1520 includes a drive bush 1530 and a nut 1540, which are both part of the first cartridge. The drive means 1520 furthermore includes the drive shaft 18 (see figure 3A, 3B).

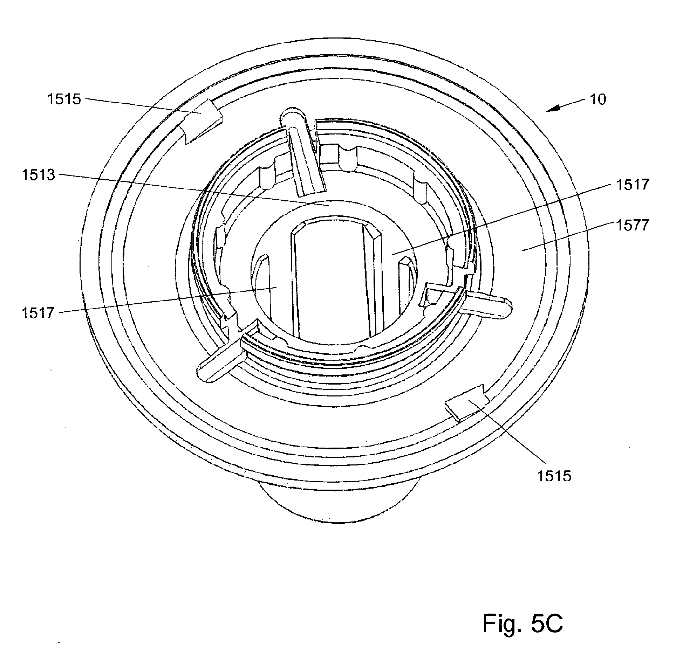

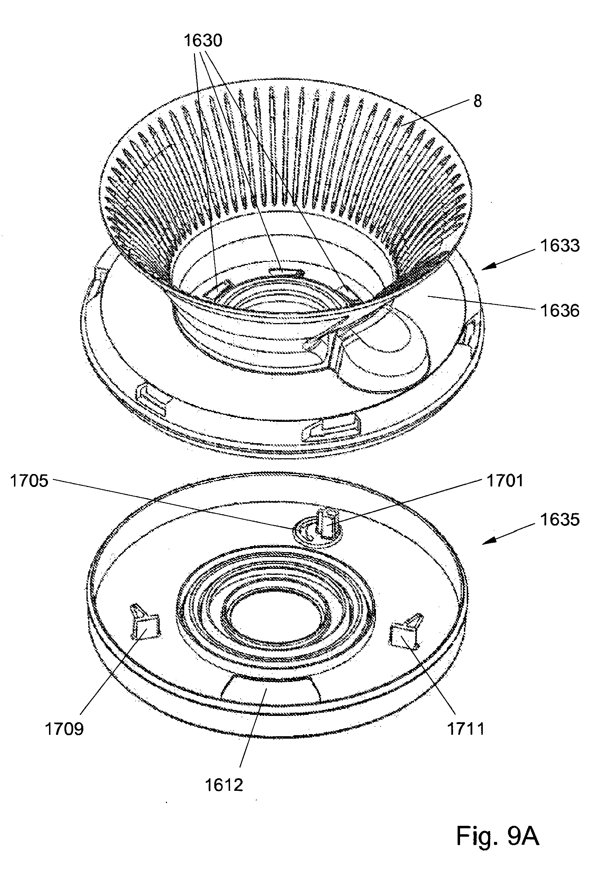

Nut 1540 is mounted on drive bush 1530. The two pieces are connected by means of the screw thread 1532 covering most of the surface of the drive bush 1530 and the corresponding screw thread 1544 at the interior of nut 1540. Nut 1540, when the system is in operation, climbs down along the screw thread, as will be discussed in detail herein after. Nut 1540 comprises two protrusions 1542, each of the protrusions engaging with one of the four slots 1517 (see figure 5C), which vertically extend along most of an interior wall 1513 of the hollow hub portion 1511. At the bottom of the impellor base there are edges 1515 being part of a ratchet connection together with scores 1630 (see figure 9A).

Drive shaft end 1573 of the coffee preparing appliance has a number of keys 1575 (preferably 4, 6 or 8, referred to with reference number 59 in figure 4) for engagement with openings 1716 formed by corresponding protrusions 12 at the bottom side of the drive bush 1530. To facilitate engagement of the first impellor 10 and the drive shaft end upon placing of the cartridge on the appliance the number of keys may differ between the drive shaft end 1573 and the drive bush 1530.

A part 1534 at the lower end of the drive bush 1530 is not covered with the screw thread 1532. This part 1534 is opposite to the part of wall 1513 at which the vertically extending slots 1517 are not present.

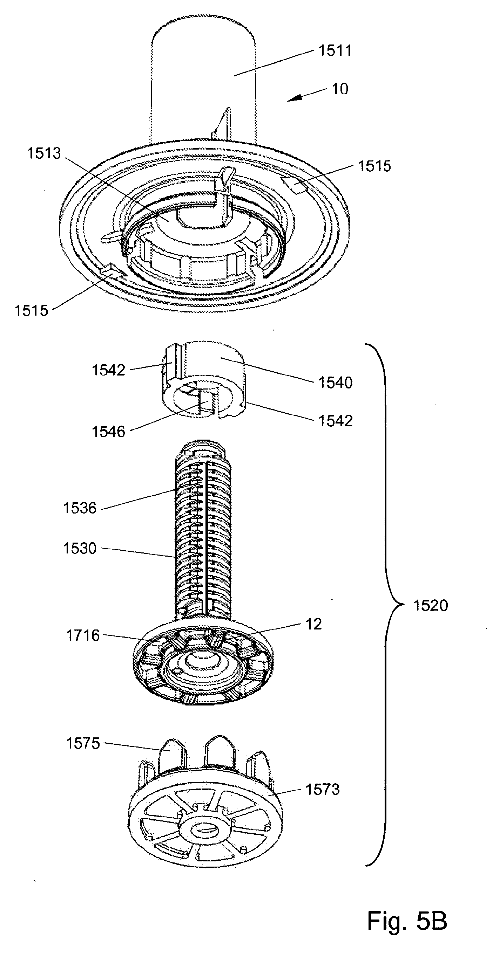

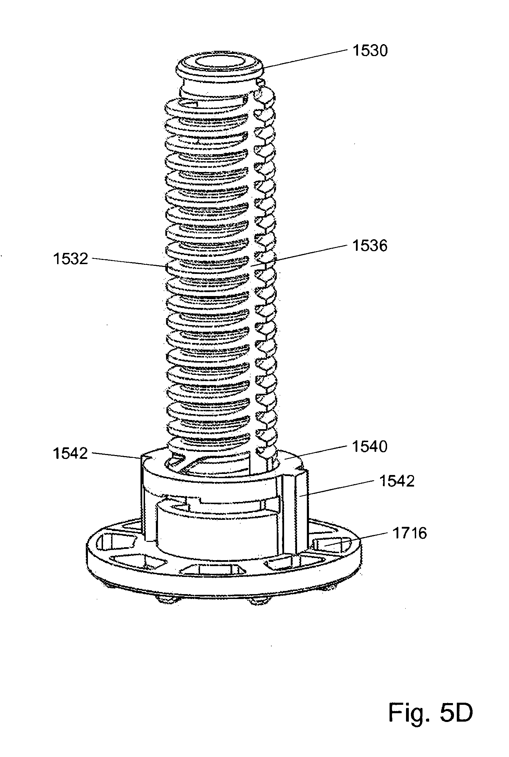

There are two vertically extending interruptions 1536 (only one of them is visible in figures 5A, 5B) in the screw thread at opposite sides of the drive bush 1530. The interruption in the screw thread at a first side (the right side in figures 5A,5B) is abrupt and at a second side (the left side in figures 5A,5B) is gradual (i.e. a ramp), i.e. the thickness of the screw thread gradually increases from nothing to the normal thickness, as can be appreciated in figures 5D-5G. At opposite sides of the interior of nut 1540, there is a corresponding edge 1546 (see figures 5B and 5G), which is asymmetrically shaped, such that, when the edge 1546 is inserted in one of the slots 1536, the highest thickness of the edge corresponds to the side of the interruptions where the thickness of the screw thread is nil and the lowest thickness correspond to the other side of the corresponding interruption 1536. So, the shape of the edge 1546 and the interruptions 1536 is such that they enable the movement of the nut along the screw thread in downward direction and impede the movement of the nut in the opposite upward direction, as is well known in the art.

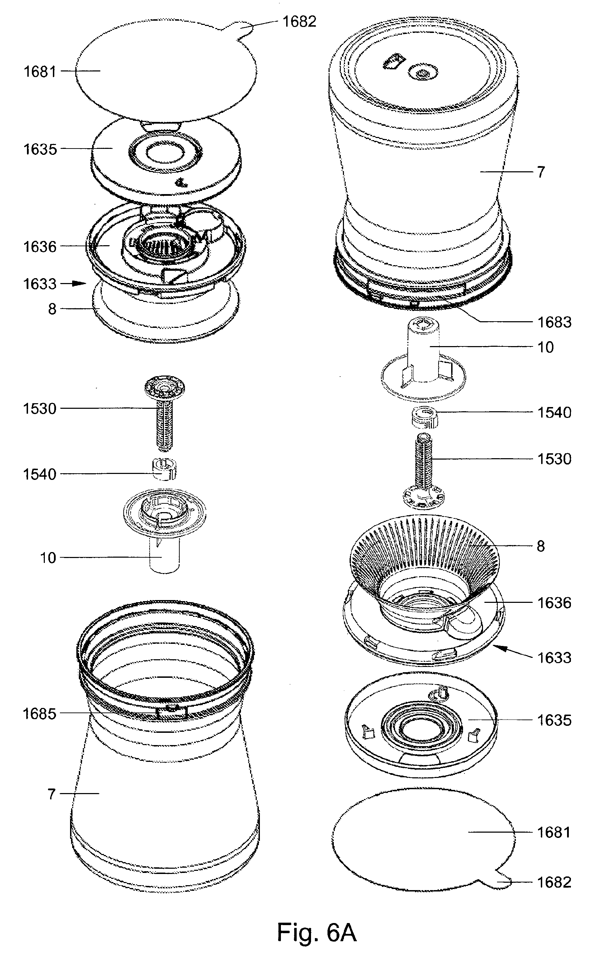

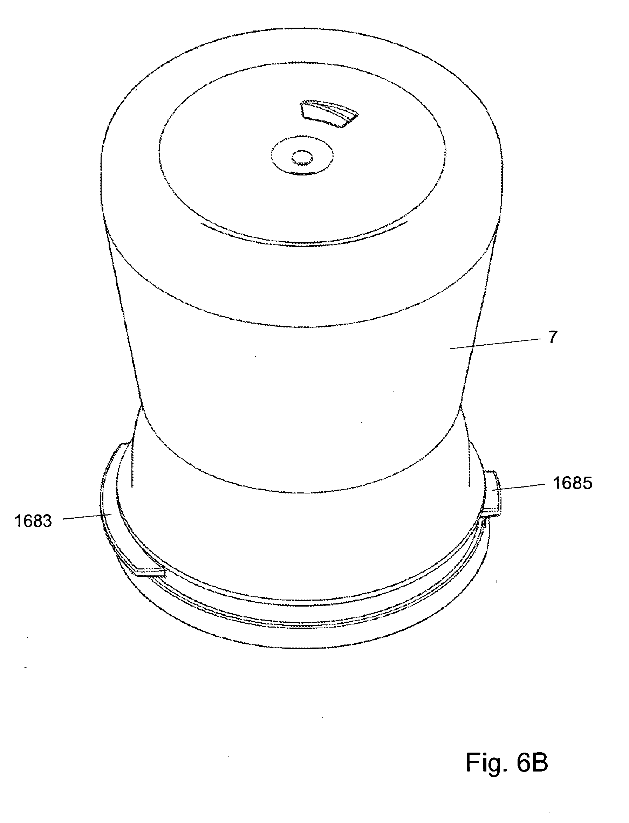

Referring to now to Figures 6A, 6B and 6C an embodiment of the coffee bean packaging cartridge 3 of the first type, i.e. with anti-refill impellor 10, is shown in an exploded arrangement, perspective views and cross sectional view. This packaging cartridge includes the container 7 defining an interior volume for coffee beans. The container 7 is preferably made from a transparent material so that its contents can be seen. Optionally, the container 7 may be partially covered by an outer sleeve (not shown) which may be printed with a description of the kind of coffee beans inside and may also be apertured to reveal a translucent portion of the container 7. The container 7 is also provided at a lower end thereof with bayonet formation 1683, 1685 for coupling with the openings 56 in the side wall 54 of the recess 50 of the coffee brewing apparatus 3. Inserted into an open bottom end of container 7 is a closure member 1633. The closure member 1633 has the ribbed funnel 8 for guiding coffee beans towards the impellor 10 and a base flange 1636. A rotatable closure disk 1635 is rotatably connectable with respect to the base flange 1636 of the closure member 1633. The closure member 1633 and the rotatable closure disk 1635 together form an interface between the cartridge and a coffee brewing apparatus. The assemble cartridge can be sealed against deterioration from the ambient air by a sealing membrane 1681 that attaches to the perimeter edge of the container 7. The sealing membrane and barrier foil 1681 may again be equipped with a conventional one-way pressure relief valve for venting excess pressure from gases emanated from freshly roasted beans to the exterior of the packaging cartridge. Preferably such a venting valve should open at a pressure of between 0.1 bar and 0.5 bar to prevent deformation of the container by inflation. To facilitate removal of the sealing membrane 1681 before placing the cartridge on a brewing apparatus, a pulling tab 1682 may be provided.

Figures 6B and 6C show two different perspective views of the coffee bean packaging cartridge shown in figure 6A.

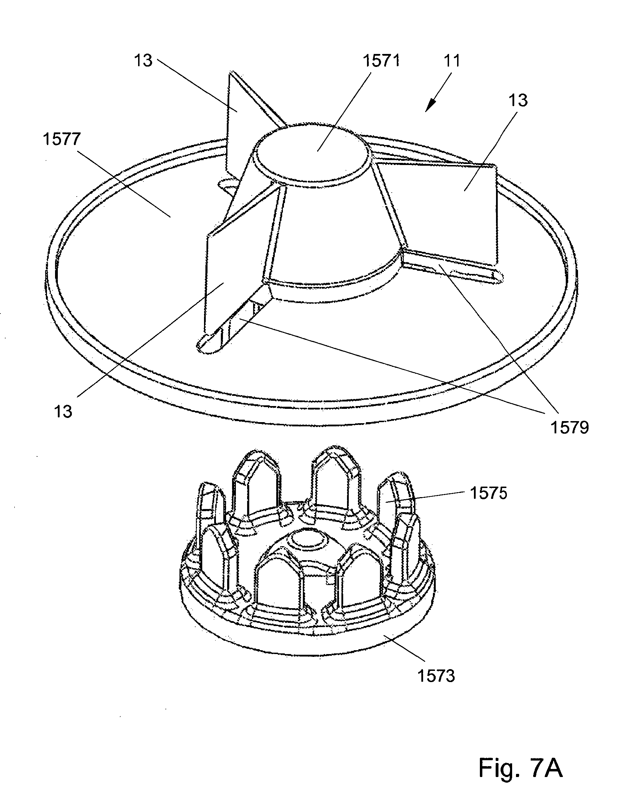

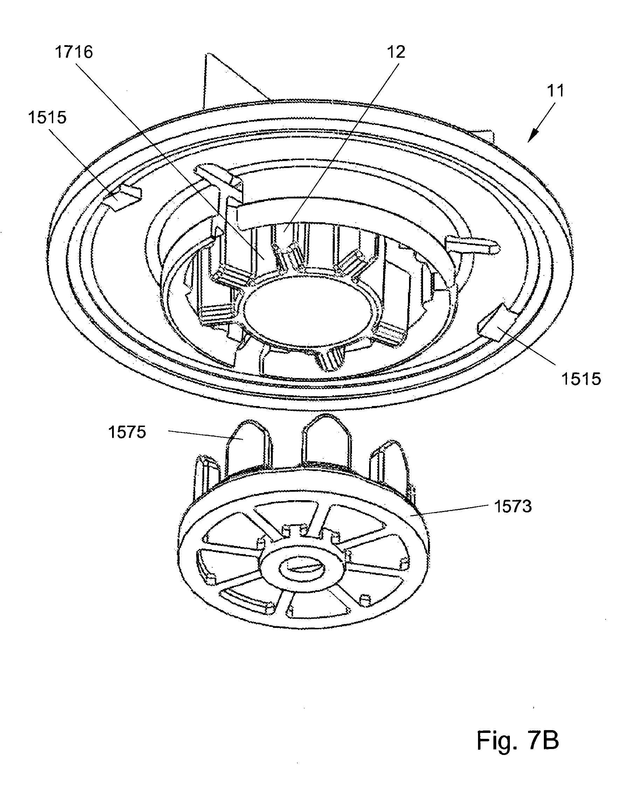

One suitable form of the second impellor 11 without anti-refill mechanism is shown in detail in Figures 7A and 7B. The features of the second impellor 11, which are similar to those of the first impellor 10, are indicated with the same reference numbers. The impellor 11 has a hollow hub portion 1571 engageable by the drive shaft end 1573 of the coffee preparing appliance, which for this purpose has a number of keys 1575 (preferably 4, 6 or 8) for engagement with corresponding protrusions, or keys in the interior of hollow hub 1571.

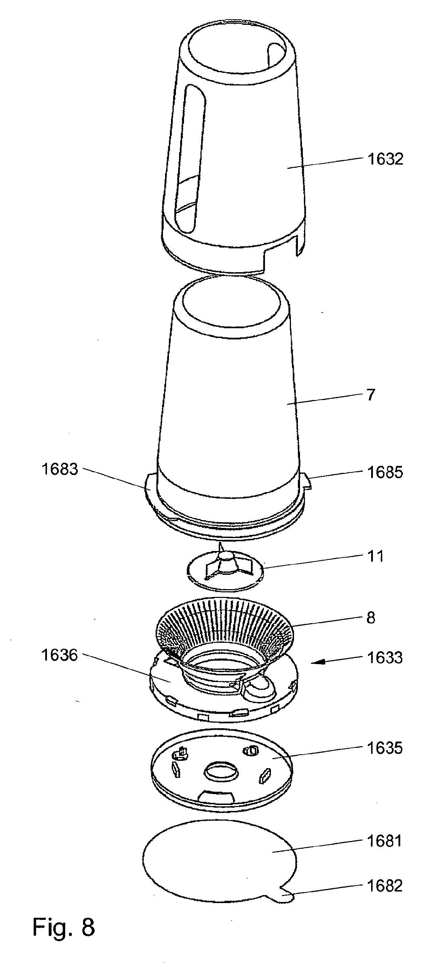

Referring to Figures 8 an exploded view of the second cartridge is shown. It can be appreciated that, with exception of the used impellors and the drive means thereof, the second cartridge is the same as the first cartridge. Therefore, the perspective view of the second cartridge is the same as the perspective view of the first cartridge, as shown in figures 6B and 6C. In figure 8, the outer sleeve 1632 is shown, which may cover the container 7.The outer sleeve may be printed with a description of the kind of coffee beans inside and may also be apertured to reveal a translucent portion of the container 7.

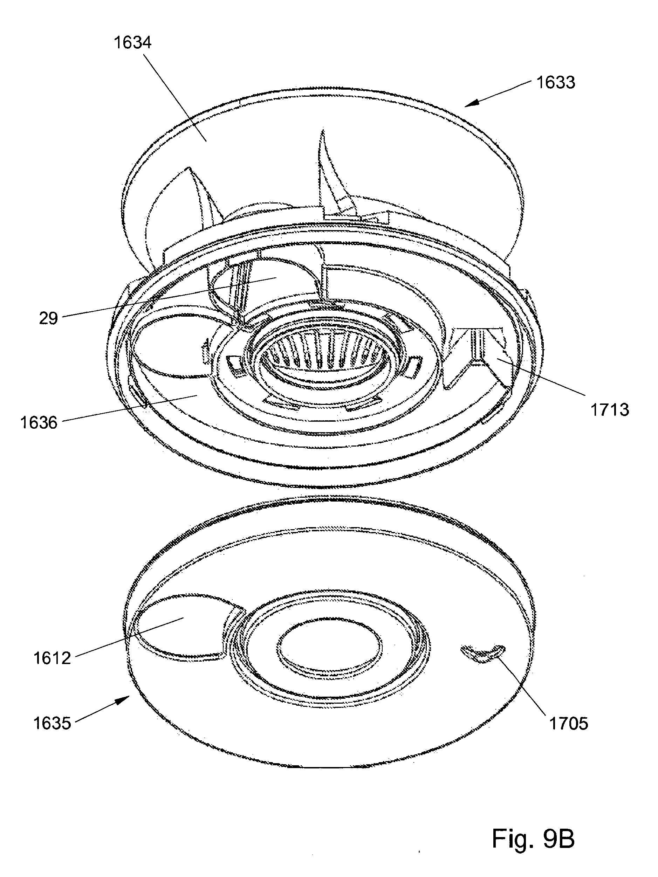

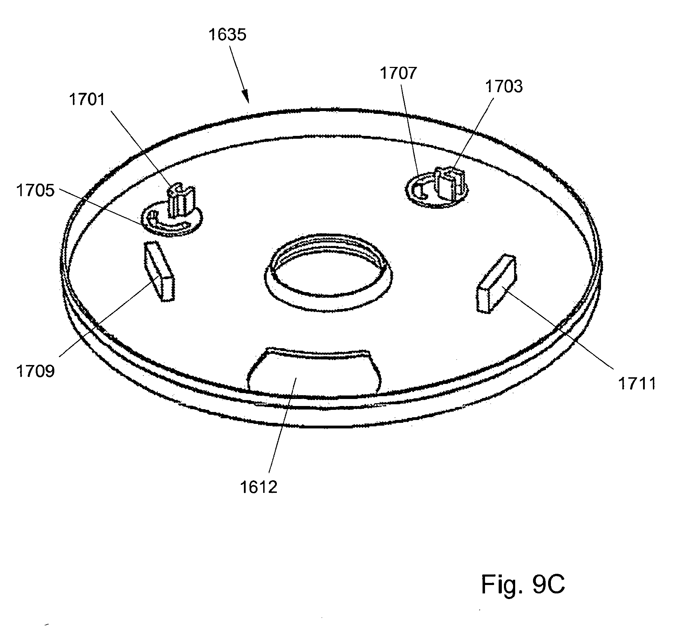

The interface forming bottom parts of the first/second cartridge are separately shown in more detail in Figures 9A, 9B and 9C. The ribbing on funnel 8 as further seen in the exploded view of Figure 9A is useful in preventing sticking of coffee beans to the surface of the funnel 8.

By appropriate spacing between the successive ribs on funnel 8 it is possible to minimise the contact surface between the beans and the funnel surface. As the skilled person will recognise, such ribbing is merely one of various ways to reduce the contact surface and protruding bulges may be equally effective. Also the inclination given to the funnel may be subject to variation, but an angle in excess of 30 degrees, up to 90 degrees has been found effective.

The rotatable closing disk 1635 has an aperture 1612, which upon appropriate rotation can register with exit opening 29 of the closure member 1633 (see Figure 9B). The closing disk 1635 on its upper surface has protruding there from a first detent 1701 and a second detent 1703 (see Figure 9C). The first abutment is bordered by semi-circular slots 1705 and 1707, respectively. Additionally, protruding from the upper surface of the rotatable closing disk 1635 is a first abutment 1709 and a second abutment 1711 for limiting rotational movement in respect of the exit opening 29. Further provided on a bottom face of the base flange 1636 of the closure member 1633 is a first pair of latching arms 1713 and a second pair of latching arms (not shown). The first pair of flexible latching arms 1713 is positioned to cooperate with the first detent 1701 in the closed position of the rotatable closure disk 1635. The second detent 1703 and the second pair of flexible latching arms also cooperate together in the closed position of the closure disk 1635 and are optional.

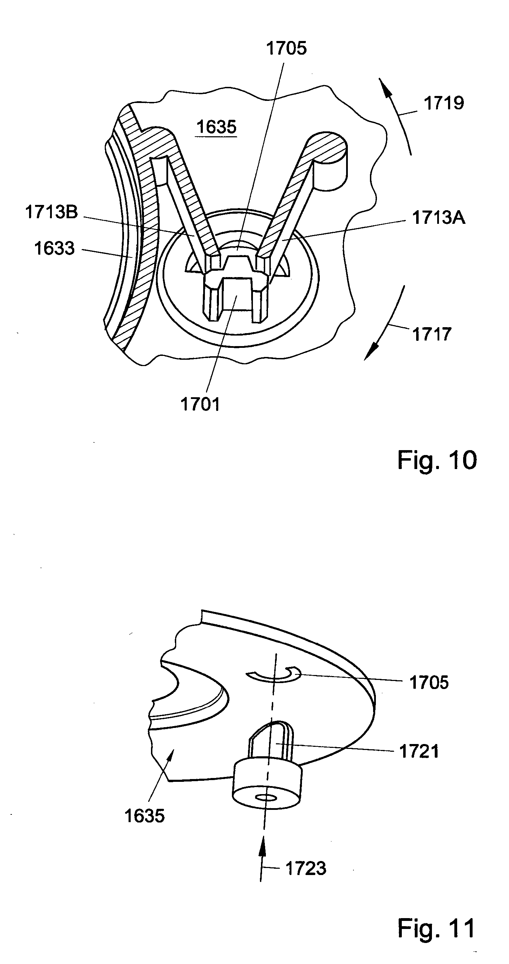

In reference to Figure 10 it is shown how the first detent 1701 has been caught behind the converging flexible arms 1713A and 1713B of the first part of flexible arms. The position of the detent 1701, as shown in Figure 10, has resulted from rotation of the closure disk 1635 in respect of the closure member 1633 in the direction of arrow 1717. Rotation in the opposite direction of arrow 1719 is effectively prevented by the flexible arms 1713A and 1713B engaging the first detent 1701. Accordingly when the cartridge is in the closed position as determined in the partial cross-section of Figure 10 it may be removed from the apparatus without any risk of spilling beans. Also this latching arrangement ensures that the cartridge is not accidentally opened by rotation of the closure disk 1635.

As shown in Figure 11 an unlocking element 1721, which is part of a coffee brewing appliance, can engage through the semi-circular slot 1705 in the direction of arrow 1723 when the cartridge is placed on the appliance. The unlocking element 1721 has a V-shaped upper contour that forces apart the flexible arms 1713A and 1713B of the first pair of flexible arms 1713. This will then allow rotation of the closure disk 1635 in the direction of arrow 1719 by allowing the first detent 1701 to pass between the spread apart flexible arms 1713A and 1713B. This rotating movement is obtained by manually rotating the cartridge with respect to the appliance to engage the bayonet means 1683, 1685 on the container 7 with the counter bayonet formations 56 on the brewing apparatus.

The operation of the second detent 1703 in respect of the second pair of flexible latching arms is identical and when optionally provided will give additional protection against accidental opening, when not engaged on a coffee brewing apparatus.

Referring to figure 4 again, the recess 52 comprises rotatable protruding edges 59 (referred to with reference number 1575 in figures 5A,5B, 7A and 7B)at its center, which are positioned at the end of the driving shaft 18, which is driven by the first motor 17. On these edges the corresponding openings 1716 at the bottom side of the drive bush 1530 of the first impellor 10 should be placed, in case of using the cartridge of the first type with anti-refill mechanism. In case of using the cartridge of the second type without anti-refill mechanism, the opening 1716 on the bottom side of the second impellor 11 at the bottom side of the second cartridge 3 should be placed on these edges 59. The openings 1716 receive the edges 59 when the cartridge is connected with the coffee brewing apparatus.

The upstanding side wall 54 of the recess 52 may be surrounded by a housing 55, as shown in figures 1-2.

The coffee brewing apparatus comprises a control device unit 40 schematically shown in figure 3A and 3B, preferably a microprocessor for controlling the dosing, grinding and brewing process as well as the anti-refill mechanism in case of using a cartridge of the first type. The controller may activate these processes after that it has detected that the cartridge 3 has correctly been connected to the coffee brewing apparatus 4.

For filling of the dosing volume the conveying impellor 10/11 is rotated with a rotational speed in the range of 100 to 500 rpm, and preferably between 250 and 300 rpm. To fill the metering chamber some fifteen revolutions of the impellor 10/11 (i.e. the bottom 1577 and the vanes 13) will normally suffice. However, to ensure filling under even adverse conditions, it may be convenient to allow for some extra revolution such as thirty or twenty-five in total. For filling of the dosing volume the conveying impellor 10/11 is rotated with a rotational speed in the range of 100 to 500 rpm, and preferably between 250 and 300 rpm. Once the filling of the dosing volume has been accomplished, the appliance will switch from driving the impellor 10/11 to driving its grinder. With the impellor 10/11 immobilised the metering chamber will gradually empty into the grinder. Because the impellor 10/11 is inactive, no beans will escape from container 7, also because of the presence of the trickle through edge 22.

According to an embodiment, the controller controls these processes as follows. In a first step the metering chamber is completely filled with coffee beans. Thereto, the controller controls the first motor 17 to drive the shaft in clockwise direction according to a top view. Accordingly, the first/second impellor starts rotating in the clockwise direction. In case of the first impellor 10, the drive shaft 18 rotates the drive bush 1530 and the nut thereon 1540. The protrusions 1542 (see figure 5A) of the nut 1540, which are engaged with the corresponding slots in the wall of the recess of the hollow hub portion 1511 cause the hollow hub portion 1511 and thereby also the bottom 1577 and the vanes 13 connected thereto to rotate. The ratchet connection between the bottom 1577 of the impellor 10 and the closure plate 1633 of the first cartridge allows the rotation of the impellor in the clockwise direction. The edge 1546, which is positioned in one of the corresponding slots 1536 in the screw thread 1534 of the drive bush 1530, impedes the rotation of the nut 1540 with respect to the drive bush 1530. In this example in the first step, the impellor 10 is driven longer than is required for completely filling or at least substantially completely filling the metering chamber (in this application at least substantially means for example for more than 90%). This is possible, because of the use of the flexible vanes 13. The metering chamber is arranged for receiving a portion of coffee beans corresponding to a dosed amount of coffee beans which is preferably necessary for preparing a single serving of coffee beverage, such as a single cup coffee comprising 80-160 ml of coffee. A filled metering chamber comprises in this example one dose of coffee beans. One dose of coffee beans comprises 5-11, preferably 6-8 grams of coffee beans.

Then, in a second step the control device 40 controls the motor 17 to rotate the drive shaft 18 180° or a little more in the opposite counter clockwise direction. The ratchet connection 1515, 1630 (see figures 5B/9A) will cause the impellor 10 to stay in its position. The rotation force of the drive shaft 18 will cause the drive bush 1530 to rotate, too. Since the nut 1540 is connected by means of a protrusion 1542 and corresponding slot 1517 to the impellor 10, which is stationary, the rotation of the drive bush 1530 will cause the nut 1540 to move down with respect to the drive bush 1530 along the screw thread 1532 until its edge 1546 snaps into one of the corresponding interruptions 1536, again. This is because the resistance of moving the nut 1540 along the screw thread 1532 is smaller than the resistance of moving the impellor 10 in counter clockwise direction with respect to the closure plate due to the ratchet connection 1515, 1630. In case of the counter clock wise rotation is larger than 180°, the edge 1546 may be positioned under a little tension some where along the "ramp" of interruption 1536. Wit a small clockwise rotation, the edge 1546 may be brought in a tensionless position in the interruption 1536.

Then, in a third step, the controller activates the grinder by activating the second motor 101. The grinder is activated longer than is required for emptying the metering chamber and for grinding all the coffee beans which were collected in the metering chamber during the first step. In this example in the third step the grinder is activated longer than required for completely emptying or at least substantially completely emptying the metering chamber (in this application at least substantially completely emptying means for example for more than 90%).

Finally, in a fourth step which follows after that the second step is completed the controller controls the brewing device to brew coffee based on the grinded coffee and on heated water.

When the cartridge of the first type is used for the first time the nut 1540 is in its initial position shown in figures 5G-5H, at the top end of the drive bush 1530. As the 180° counter clockwise rotation is executed after each complete filling of the metering chamber, as the coffee beans of the first cartridge are used, the nut 1540 climbs down "half a revolution" along the screw thread 1532 of the drive bush 1530. After a first predetermined number of counter clockwise revolutions, the nut leaves the screw thread 1532 and falls to a position next to the part 1534 at the lower end of the drive bush 1530, which is not covered with the screw thread 1532, as shown in 5D-5F. As a result, the protrusions 1542 of the nut 1540 disengage from the corresponding slots of the wall 1513 of the recess, because the vertical extension of these slots corresponds to the vertical extension of the screw thread 1532, i.e. the slots do not extend to the part of the wall 1513 opposite to the part 1534 not covered with screw thread. This is shown in figures 5I-5J. Because of this disengagement, rotation of the drive shaft 18/drive bush 1530 does not result in a corresponding rotation of the impellor. Consequently, the first cartridge 10 cannot be used any more with the coffee brewing apparatus and should be replaced by a new one.

Preferably, the size of the cartridge and the length of the screw thread are chosen such that the first predetermined number of revolutions of the drive shaft resulting in disabling the driving of the impellor is larger than the number of revolutions corresponding to the number of servings of coffee possible with the full cartridge.

When a cartridge of the second type is used, the controller works exactly in the same way, i.e. after filling the metering chamber completely, it controls the motor so that the drive shaft 18 makes a 180° counter clockwise rotation. However, this small counter clockwise rotation does not adversely affect the ability of the second impellor 11 of transporting the coffee beans to the exit opening of the second cartridge. The second impellor simply makes a corresponding rotation in the counterclockwise direction but without any coffee beans in the cartridge this rotation has no relevant effect. The ratchet connection 1515,1630 (see figures 7B and 9A) between the second impellor 11 and the closure plate 1633 does not impede this counter clockwise rotation.

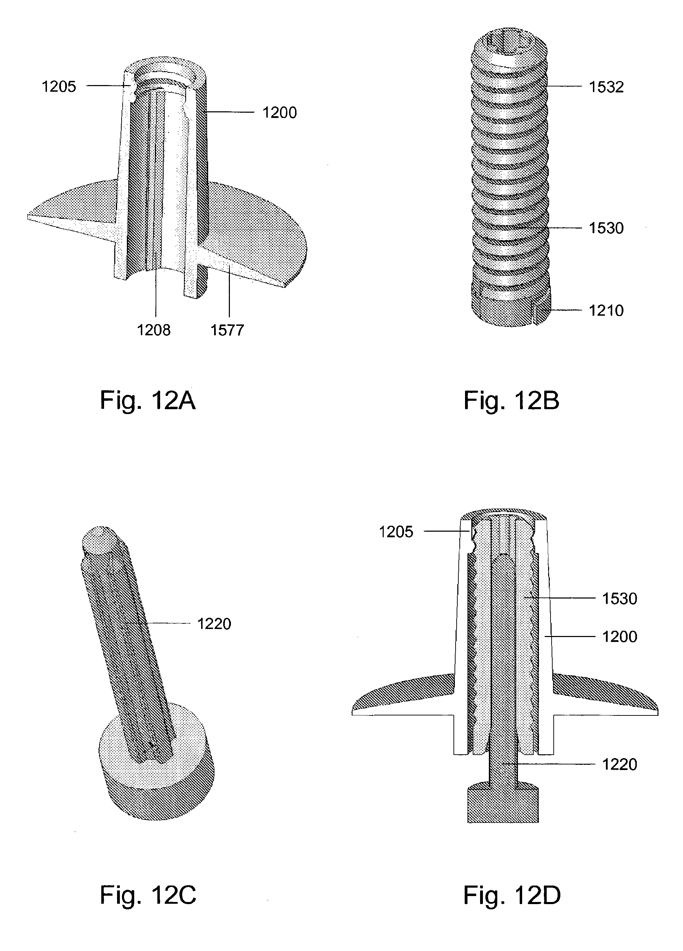

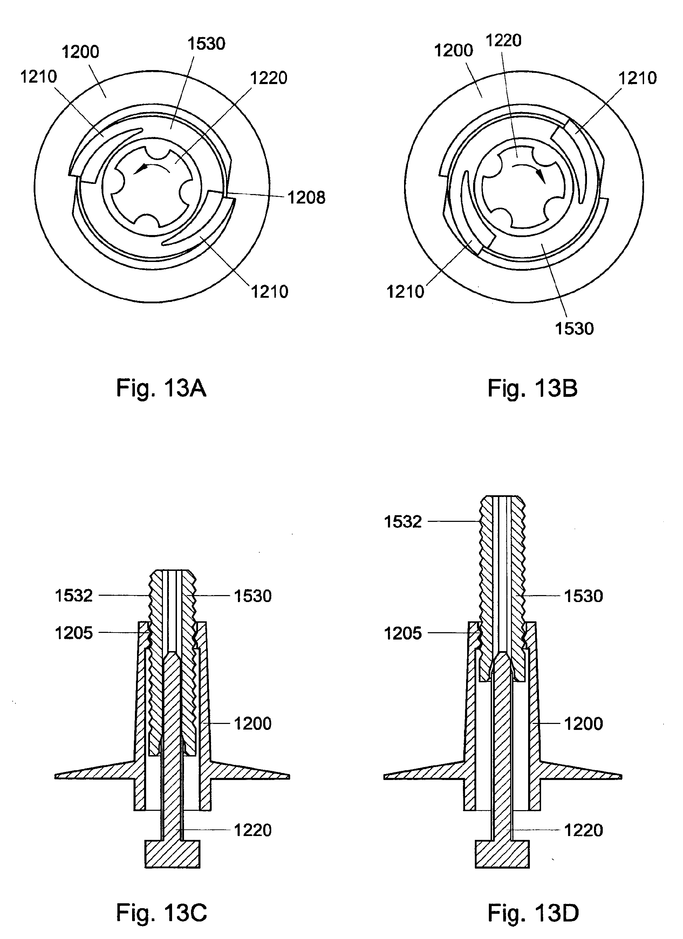

With reference to figures 12A-12D and 13A-13D, the impellor and drive means will be described of a cartridge of the first type according to a further embodiment. According to this further embodiment the coffee brewing apparatus should have a longer drive shaft 1220 (see figure 12C), which is inserted in the hollow interior of a drive bush 1530 (see figure 12B). The drive bush has two snap fingers 1210 near its bottom. The drive bush 1530 at its turn is inserted in the interior of a hollow hub portion 1200 of an impellor. The interior wall of this hollow hub portion comprises a coil thread 1205 and two edges 1208 (see figure 12A, only one shown). In figure 12D the three elements are shown together in their initial position.

Figure 13A shows a bottom view of the drive shaft, drive bush and impellor for the case that the drive shaft rotates clockwise. The snap fingers 1210 of the drive bush lock with the edge 1208 of the interior wall of the hollow hub portion, so that the impellor rotates.

Figure 13B shows of the drive shaft, drive bush and impellor for the case that the drive shaft rotates counter clockwise for a little over 180°. Due to the ratchet connection between the impellor and the closure member 1633, described herein above, the impellor stays in its position. The snap fingers 1210 bend and lock in their subsequent position. The drive bush 1530 moves up half a revolution or pitch due to its screw thread 1532, which engages with the coil thread 1205 of the hub part of the impellor. By repeating this process after each coffee dosing the drive bush works its way up in the hub part, as shown in figure 13C. After the first predetermined number of revolutions, the drive bush reaches its final position, as shown in figure 13D. In this position, the drive shaft 1220 does not reach the drive bush 1530 and the impellor will not rotate upon rotation of the drive shaft 1220.

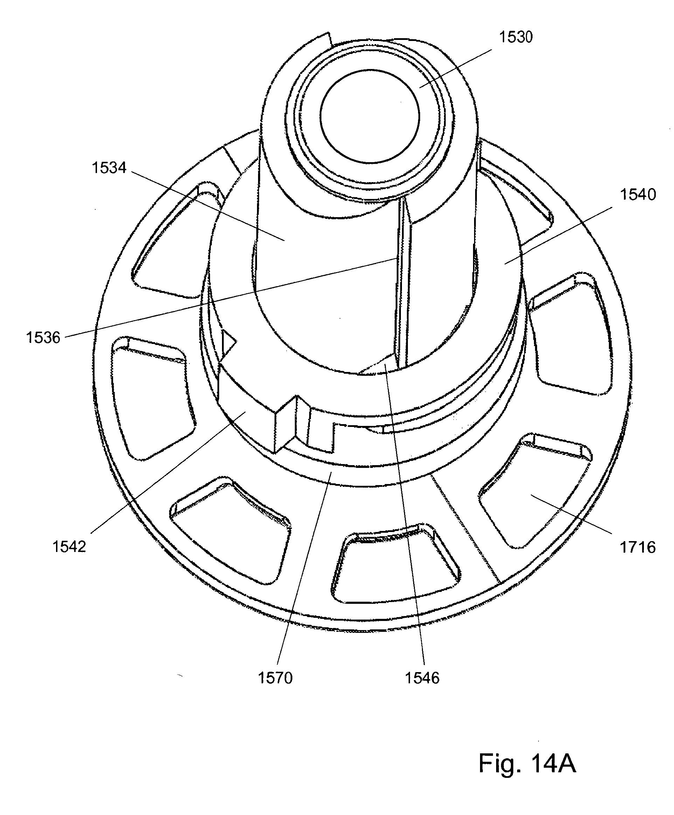

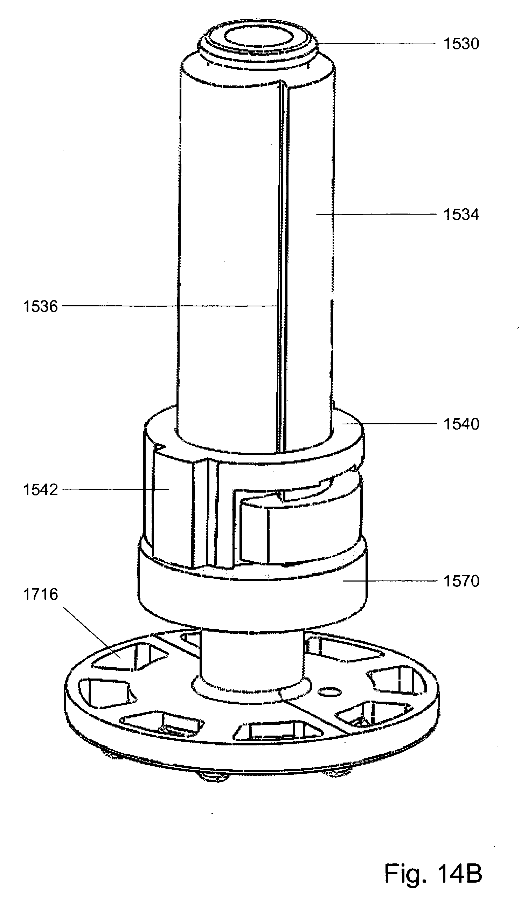

Now with reference to figures 14A-14B, a further embodiment will be described of drive mans for an impellor used in a cartridge of the second type, i.e. without anti-refill mechanism. The impellor used in this case is the impellor 10 used for the cartridge with anti-refill described herein above with reference to figures 5A-5J. However, the drive means differ in the following aspects. The drive bush 1530 is not covered with screw thread at all and the nut 1540 does not have screw thread at its interior side. As a result, the nut 1540 may move freely with respect to the drive bush 1530 in a vertical direction but due to the gravity it will be positioned as shown in figures 14A-14B on the top of a flange 1570, which is part of the drive bush 1530. In this position, and also in all other possible positions of the nut 1540, the nut is engaged with the hollow hub portion 1511 by means of its protrusions 1542. Consequently, the rotation of the drive shaft 18 in clockwise direction results in the impellor 10 being rotated. When the drive shaft is rotated half a turn in the counter clock wise direction, nut 1540 rotates with respect to the drive bush 1530. However, this rotation is functionless, because the edge 1546 simply moves from one to the other slot 1536 of the drive bush remaining in a position for driving the impellor in case of subsequent clockwise rotation.

It is thus believed that the operation and construction of the present invention will be apparent from the foregoing description. The invention is not limited to any embodiment herein described and, within the purview of the skilled person; modifications are possible which should be considered within the scope of the appended claims. For example, the transportation means of the second cartridge for transporting the coffee beans from the container to the metering chamber may be implemented as passive means not driven by a motor, for example by means of a downwardly extending bottom wall for transporting the coffee beans towards the exit opening and into the metering chamber under the influence of gravity only. A special means may in that case be required to close the inlet opening of the metering chamber once it is filled with coffee beans. Furthermore, instead of disabling the driving of the impellor by disengagement of a mechanical connection the system may be brought into a motor stall condition. One option thereto is the engagement of an edge of the rotatable drive means in a corresponding slot of the funnel 8, after the first predetermined revolutions of the drive shaft.

Similarly all kinematic inversions are considered inherently disclosed and to be within the scope of the present invention. The term "comprising" when used in this description or the appended claims should not be construed in an exclusive or exhaustive sense but rather in an inclusive sense. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Features which are not specifically or explicitly described or claimed may be additionally included in the structure according to the present invention without deviating from its scope.

## Claims

1. Coffee beverage system (1), including a first coffee bean packaging cartridge (3) and a coffee brewing apparatus (4) wherein the first coffee bean packaging cartridge (3) can be removable connected to the coffee brewing apparatus (4), the first coffee bean packaging cartridge (3) being arranged for holding and supplying multiple servings of coffee beans, the first coffee beans packaging cartridge (3) including:
a container (7) comprising an interior volume and at least one exit opening (29) defining a coffee bean outlet, the interior volume holding coffee beans;
transportation means (6) adapted for enabling transportation of the coffee beans from the interior volume towards the exit opening (29) of the first cartridge (3);
wherein coffee apparatus comprises an entrance opening (29) for receiving coffee beans which are transported with the aid of the transportation means (6) towards the exit opening (29) of the first cartridge (3), a grinder (28) for grinding coffee beans which have entered the coffee apparatus (4) via the entrance opening (9) and a brewing device (46) for brewing coffee on the basis of grinded coffee obtained by means of the grinder (28), wherein the transportation means (6) of the first cartridge (3) comprise a part which is movable relative to a main body of the first cartridge (3) for transporting the coffee beans towards the exit opening (29) of the first cartridge (3) upon driving of said transportation means (6), **characterized in that** the coffee brewing apparatus (4) is provided with a motor (17) and a vertically extending drive shaft (18) wherein said drive shaft (18) is releasable connected with the transportation means (6) of the first cartridge (3) for driving and thereby moving the transportation means (6) of the first cartridge (3) upon rotation of the drive shaft (18) by means of the motor means (17) for transporting the coffee beans towards the exit opening (29) of the first cartridge (3), wherein the first cartridge (3) is arranged such that, if the drive shaft (18) is connected with the transportation means (6), after a first predetermined number of revolutions of the drive shaft (18) the transportation means (6) of the first cartridge (3) is automatically disabled for transporting the coffee beans towards the exit opening (29) and wherein the system (1) is further provided with a second coffee bean cartridge which can also be removable connected to the coffee brewing apparatus (4), the second coffee bean cartridge (3) being arranged for being filled with and holding and supplying multiple servings of coffee beans, the second coffee beans cartridge (3) including:
a container (7) comprising an interior volume and at least one exit opening (29) defining a coffee bean outlet, the interior volume being arranged for holding coffee beans;
transportation means (6) adapted for enabling transportation of the coffee beans from the interior volume towards the exit opening of the second cartridge;
wherein the second cartridge (3) is adapted to the coffee apparatus (4) so that, if the second cartridge (3) is connected to the coffee apparatus (4), coffee beans which are transported with the aid of the transportation means (6) of the second cartridge (3) towards the exit opening (29) of the second cartridge (3) can be received by the coffee apparatus (4) via the entrance opening (9) for preparing coffee and wherein the second cartridge (3) is arranged such that the transportation means (6) of the second cartridge (3) will not be disabled upon a predetermined number of revolutions of the drive shaft (18) or will only be disabled after a second predetermined number of revolutions of the drive shaft (18) wherein the second predetermined number of revolutions is greater than the first predetermined number of revolutions.

2. System (1) according to claim 1, **characterized in that** the second cartridge (3) is designed to be refillable.

3. System (1) according to claim 1 or 2, **characterized in that** the first cartridge (3) is designed not to be refillable.

4. System (1) according to any preceding claim, **characterized in that** the first cartridge (3) is arranged such that, if the drive shaft (18) is connected with the transportation means (6), after a first predetermined number of revolutions of the drive shaft (18) in a direction other than, or other than used for driving the transportations means (6) of the first cartridge (3) the transportation means (6) of the first cartridge (3) is automatically disabled for transporting the coffee beans towards the exit opening (29).

5. System (1) according to any preceding claim 1-3, **characterized in that** the first cartridge (3) is arranged such that, if the drive shaft (18) is connected with the transportation means (6) after a first predetermined number of revolutions of the drive shaft (18) for driving the transportations means (6) of the first cartridge (3) the transportation means (6) of the first cartridge (3) is automatically disabled for transporting the coffee beans towards the exit opening (29).

6. System (1) according to any of the preceding claims, **characterized in that** the system (1) is arranged for executing the automatic disabling of the transportation means (6) of the first cartridge (3) for transporting the coffee beans towards the exit opening (29) by means of bringing it into a motor stall condition.

7. System (1) according to any preceding claims 1-5, **characterized in that** the system (1) is arranged for executing the automatic disabling of the transportation means (6) of the first cartridge (3) for transporting the coffee beans towards the exit opening (29) by means of disengagement of a mechanical connection, so that the rotation of the drive shaft (18) does not result in driving the transmission means or a part of the transmission means.

8. System (1) according to any of the preceding claims, **characterized in that** the movable part of the transportation means (6) of the first cartridge (3) includes a disk element (10), which rotates upon rotation of the drive shaft (18).

9. System (1) according to claim 8, **characterized in that** the disk element (10) is an impellor including a bottom and a plurality of vanes (13).

10. System (1) according to claim 8 or 9, **characterized in that** the disk element (10) includes a recess wherein the disk element (10) rotates upon rotation of the drive shaft (18) in a direction for driving the transportations means (6) due to an engagement of drive means with the recess.

11. System (1) according to claim 4 and 10, **characterized in that** the first cartridge (3) comprise means (1615, 1630) for causing the disk element (10) to stay in its position upon rotation of the drive shaft (18) in the direction other than, or other than used for driving the transportations means (6).

12. System (1) according to claim 11, **characterized in that**, the first cartridge (3) comprises means (1530) for the displacement of an element (1540) of the drive means in the recess upon rotation of the drive shaft (18) in the direction other than, or other than used for driving the transportations means (6).

13. System (1) according to claim 12, **characterized in that** the means (1530) for displacement is arranged such that after a first predetermined number of revolutions of the drive shaft (18) in the direction other than, or other than used for driving the transportations means (6) the element (1540) of the drive means in the recess reaches a position corresponding to a motor stall condition or a position resulting in the disengagement of the mechanical connection (1515, 1630).

14. System (1) according to claims 12 or 13, **characterized in that** the means (1530) for displacement are configured for displacing the element (1540) through the recess in one direction and impeding the displacement of the element in the other opposite direction.

15. System (1) according to claim 10, **characterized in that** the drive means comprises the drive shaft (18) and a drive bush (1530), mountable on the drive shaft (18).

16. System (1) according to claim 11 and any of preceding claims 12-15, **characterized in that** the means for causing the disk element (10) to stay in its position upon rotation of the drive shaft (18) in the direction other than, or other than used for driving the transportation means (6) is a ratchet connection (1515, 1630) between the disk element (10) and an upper surface of the coffee brewing apparatus (4),

17. System (1) according to any preceding claim, **characterized in that** the transportation means (6) of the first cartridge (3) comprise a downwardly extending bottom wall such as a funnel (8) of the container (7) for transporting the coffee beans towards the exit opening (29) of the first cartridge (3) under the influence of gravity.

18. System (1) according to any preceding claim, **characterized in that** the transportation means (16) of the second cartridge (3) comprises a part (10) which is movable relative to a main body of the second cartridge (3) for transporting the coffee beans towards the exit opening of the second cartridge (3) upon driving of said transportation means (6), and **in that** the transportation means (6) are releasable connectable with the vertically extending drive shaft (18) of the coffee brewing apparatus(4), wherein upon rotation of the drive shaft (18) by means of the motor (17) the transportation means (6) of the cartridge (3) are driven and thereby moved for transporting the coffee beans towards the exit opening (29) of the second cartridge.

19. System (1) according to any preceding claim, **characterized in that** the system (1) is further provided with a metering chamber (15) for receiving coffee beans which are transported with the aid of the transportation means (6) into the metering chamber (15).

20. System (1) according to claim 19, **characterized in that** the metering chamber (15) is divided in a first chamber portion (23) which is part of the first or second cartridge (3) and a second chamber portion (25) which is part of the coffee brewing apparatus (4) wherein the second chamber portion (25) comprises a bottom portion (27) which forms a part of the grinder (28), said bottom portion (27) being arranged in the coffee brewing apparatus (4) for rotating around a first axis (35) extending in a vertical direction wherein the system (1) is arranged such that upon activation of the grinder (28) the bottom portion (27) is rotating around the vertical axis (35) for transporting the coffee beans from the metering chamber (15) into the grinder (28) and for grinding the coffee beans.

21. System (1) according to claim 20, **characterized in that** the bottom portion (27) has a conical shape such that the bottom portion (27) extends downwardly in a direction extending perpendicular to and away from the first vertical axis (35) and **in that** the first chamber portion (23) comprises the exit opening (29) of the first or second cartridge (3) and the second chamber portion (25) comprises the entrance opening (9).

22. System (1) according to claim 21, **characterized in that** that the first chamber portion (23) is located above the second chamber portion (25) wherein the exit opening (29) of the first or second cartridge (3) extends above the entrance opening (9).

23. System (1) according to any preceding claim, **characterized in that** the first and/or the second cartridge (3) comprises closing means (1633, 1635) for closing the exit opening (29) when the cartridge (3) is not connected to the coffee brewing apparatus (4).

24. System (1) according to claim 23, **characterized in that** the closing means (1633, 1635) are configured for opening the exit opening (29) when the cartridge (3) is connected to the coffee brewing apparatus (4).

25. System (1) according to any preceding claim, **characterized in that** the exit opening (29) of the first and/or second cartridge (3) is associated with a removable sealing element (1681) sealing the interior volume prior to activation of the cartridge (3) wherein preferably said sealing element (1681) prevents gasses to escape from the cartridge (3).

26. System (1) according to any preceding claim, **characterized in that** the coffee brewing apparatus (4) comprises connection means for the removable connection to the coffee bean packaging cartridge (3), the connection means comprising a recess (50) at an upper side of the coffee brewing apparatus(4), the recess (50) being surrounded by a side wall (54) and being configured for receiving a corresponding part (1683, 1685) protruding from a lower side of the first and/or second cartridge (3).

27. System (1) according to claim 26 **characterized in that** the side wall (54) comprises openings (58) for receiving bayonet elements (1683, 1685) of the first and/or second cartridge (3).

28. System (1) according to claim 27, **characterized in that** the first and/or second cartridge (3) comprises the bayonet elements (1683, 1685).

29. System (1) according to any of the preceding claims, **characterized in that** it comprises control means (40) for rotating the vertically extending drive shaft (18) with the motor means (17) thereby driving and moving the transportation means (6) for transporting the coffee beans towards the exit opening (29) of the first and/or second cartridge (3);
grinding coffee beans which have entered the coffee apparatus via the entrance opening (9) thereof; and
brewing coffee based on the grinded coffee and heated water heated by a heating device of the coffee brewing apparatus (4).

30. System (1) according to claim 29 and 19-22, **characterized in that** the control means (40) are configured for rotating the vertically extending drive shaft (18) with the motor means (17) thereby driving and moving the transportation means (6) of the first and/or second cartridge (3) for filling the metering chamber (15) and **in that** the control means (40) is furthermore configured for rotating the drive shaft (18) with the motor means (17) in a direction other than, or other than used for driving the transportations means (6) of the first and/or second cartridge (3), after the filling of the metering chamber (15).

31. System (1) according to any of the preceding claims, **characterized in that** the first predetermined number of revolutions of the drive shaft (18) resulting in disabling the transportation means (6) is larger than the number of revolutions corresponding to the number of servings of coffee possible with the full cartridge (3).

32. First coffee bean packaging cartridge (3) suitable for use in a coffee beverage system (1) according to any of the claims 1-31, wherein the first coffee bean packaging cartridge (3) is arranged for being removably connectable to a coffee brewing apparatus (4) of a coffee beverage system (1), the first coffee bean packaging cartridge (3) being arranged for holding and supplying multiple servings of coffee beans and including:
a container (7) comprising an interior volume and at least one exit opening (29) defining a coffee bean outlet, the interior volume holding coffee beans;
transportation means (6) adapted for enabling transportation of the coffee beans from the interior volume towards the exit opening (29) of the first cartridge (3);
wherein the transportation means (6) comprises a part which is movable relative to a main body of the first cartridge (3) for transporting the coffee beans towards the exit opening (29) of the first cartridge (3) upon driving of said transportation means (6), **characterized in that** the transportation means (6) are arranged for being releasably connectable with a vertically extending drive shaft (18) of a coffee brewing apparatus (4), provided with a motor (17), wherein the transportation means (6) of the cartridge are arranged to be driven and thereby moved for transporting the coffee beans towards the exit opening (29) of the first cartridge upon rotation of the drive shaft by means of the motor (17), wherein the first cartridge (3) is arranged such that, if the drive shaft (18) is connected with the transportation means (6), after a first predetermined number of revolutions of the drive shaft the transportation means (6) of the first cartridge (3) is automatically disabled for transporting the coffee beans towards the exit opening (29).

33. First cartridge (3) according to claim 32, **characterized in that** it is designed not to be refillable.

34. First cartridge (3) according to claim 32 or 33, **characterized in that** it is arranged for executing the automatic disabling of the transportation means (6) of the first cartridge (3) for transporting the coffee beans towards the exit opening (29) by means of bringing it into a motor stall condition.

35. Coffee brewing apparatus (4) for use in a system (1) according to claim 4 and claims 19-22, wherein the coffee apparatus comprises an entrance opening (9) for receiving coffee beans, a grinder (28) for grinding coffee beans which have entered the coffee apparatus via the entrance opening (9) and a brewing device (46) for brewing coffee on the basis of grinded coffee obtained by means of the grinder (28) and wherein the coffee brewing apparatus (4) is provided with a motor (17), **characterized in that** the coffee brewing apparatus comprises a vertically extending drive shaft (18) wherein said drive shaft (18) is releasably connected with transportation means (6) of a coffee bean cartridge, the coffee brewing apparatus (4) comprising a chamber portion (25) for receiving coffee beans, said chamber portion (25) comprising a bottom portion (27) which forms part of the grinder (28), said bottom portion (27) being arranged for rotating around a vertical axis (35), and control means, which are configured for rotating the vertically extending drive shaft (18) with the motor (17) thereby driving and moving transportation means (6) of a coffee bean cartridge for filling the chamber portion **in that** the control means is furthermore configured for rotating the drive shaft (18) with the motor (17) in a direction other than, or other than used for driving transportations means (16) of a coffee bean cartridge (3), after the filling of the chamber portion, and that the apparatus (4) is arranged such that upon activation of the grinder (28) the bottom portion (27) is rotating around the vertical axis (35) for transporting the coffee beans from the metering chamber (15) into the grinder (28) and for grinding the coffee beans..

36. A method for preparing a beverage by means of a coffee beverage system (1) according to any of claims 1-31 when the first coffee bean packaging cartridge (3) of the coffee beverage system (1) is connected to the coffee brewing apparatus (4) thereof, the method comprising the following steps:
rotating the vertically extending drive shaft (18) with the motor means (17) thereby driving and moving the transportation means (16) of the first cartridge (3) for transporting the coffee beans towards the exit opening (29) of the first cartridge (3);
grinding coffee beans which have entered the coffee apparatus (14) via the entrance opening (4) thereof;
brewing coffee on the basis of grinded coffee; and
after a first predetermined number of revolutions of the drive shaft (18) automatically disabling the transportation means (6) of the first cartridge (3) for transporting the coffee beans towards the exit opening (29).

37. A method for preparing a beverage by means of a coffee beverage system (1) according to any of claims 1-31 when the second coffee bean packaging cartridge (3) of the coffee beverage system (1) is connected to the coffee brewing apparatus (14) thereof, the method comprising the following steps:
rotating the vertically extending drive shaft (18) with the motor means (17) thereby driving and moving the transportation means (16) of the second cartridge (3) for transporting the coffee beans towards the exit opening (29) of the second cartridge (3);
grinding coffee beans which have entered the coffee apparatus (4) via the entrance opening (9) thereof;
brewing coffee on the basis of grinded coffee; and
rotating the vertically extending drive shaft (18) with the motor means (17) in a direction opposite to the direction for driving the transportation means (16) of the second cartridge (3) for transporting the coffee beans towards the exit opening (29) of the second cartridge (3);
wherein the transportation means (6) of the second cartridge (3) will not be disabled upon a predetermined number of revolutions of the drive shaft (13) in the direction other than, or other than used for driving the transportations means (6) of the second cartridge (3) or will only be disabled after a second predetermined number of revolutions of the drive shaft (18) wherein the second predetermined number of revolutions is greater than a first predetermined number of revolutions of the drive shaft (18) after which transportation means (6) of the first cartridge (3) according to claim 33 is automatically disabled for transporting the coffee beans of the first cartridge (3) towards the exit opening (29) of the first cartridge (3).

38. Method according to claim 37 for use with a system (1) according any of the preceding claims 19-22, **characterized in that** the transportation means (6) are driven for filling the metering chamber (15) and **in that** the drive shaft (18) is rotated with the motor means (17) in the direction other than, or other than used for driving the transportations means (6) of the first and/or second cartridge (3), after the filling of the metering chamber (15).

## Patentansprüche

1. Kaffeegetränksystem (1), umfassend eine erste Kaffeebohnenverpackungsvorrichtung (3) und eine Kaffeezubereitungsvorrichtung (4), wobei die erste Kaffeebohnenverpackungsvorrichtung (3) abnehmbar mit der Kaffeezubereitungsvorrichtung (4) verbunden sein kann, wobei die erste Kaffeebohnenverpackungsvorrichtung (3) so angeordnet ist, dass mehrere Portionen Kaffeebohnen aufgenommen und bereitgestellt werden können, wobei die erste Kaffeebohnenverpackungsvorrichtung (3) Folgendes umfasst:
einen Behälter (7), umfassend ein Innenvolumen und mindestens eine Ausgangsöffung (29), die einen Kaffeebohnenauslass definiert, wobei das Innenvolumen Kaffeebohnen enthält;
ein Transportmittel (6), welches geeignet ist, den Transport der Kaffeebohnen von dem Innenvolumen zu der Ausgangsöffnung (29) der ersten Vorrichtung (3) zu ermöglichen;
wobei die Kaffeevorrichtung eine Eingangsöffnung (29) zum Empfangen von Kaffeebohnen, die mithilfe der Transportmittel (6) zu der Ausgangsöffnung (29) der ersten Vorrichtung (3) transportiert werden, ein Mahlwerk (28) zum Mahlen der Kaffeebohnen, die über die Eingangsöffnung in die Kaffeezubereitungsvorrichtung (4) gelangt sind, und eine Brühvorrichtung (46) zum Brühen von Kaffee anhand des mithilfe des Mahlwerks (28) erhaltenen gemahlenen Kaffees umfasst, wobei die Transportmittel (6) der ersten Vorrichtung (3) ein Teil umfassen, das in Bezug auf einen Hauptkörper der ersten Vorrichtung (3) entfernbar ist, um die Kaffeebohnen zu der Ausgangsöffnung (29) der ersten Vorrichtung (3) bei Antreiben der Transportmittel (6) zu transportieren, **dadurch gekennzeichnet, dass** die Kaffeezubereitungsvorrichtung (4) mit einem Motor (17) und einer vertikal verlaufenden Antriebswelle (18) versehen ist, wobei die Antriebswelle (18) lösbar mit den Transportmitteln (6) der ersten Vorrichtung (3) verbunden ist, um die Transportmittel (6) der ersten Vorrichtung (3) beim Drehen der Antriebswelle (18) durch die Motormittel (17) anzutreiben und dadurch zu bewegen, sodass die Kaffeebohnen zur Ausgangsöffnung (29) der ersten Vorrichtung (3) transportiert werden, wobei die erste Vorrichtung (3) so angeordnet ist, dass, wenn die Antriebswelle (18) mit den Transportmitteln (6) verbunden ist, die Transportmittel (6) der ersten Vorrichtung (3) nach einer ersten vorbestimmten Anzahl an Umdrehungen der Antriebswelle (18) automatisch für den Transport der Kaffeebohnen zur Ausgangsöffnung (29) deaktiviert werden, und wobei das System (1) ferner mit einer zweiten Kaffeebohnenvorrichtung versehen ist, die ebenfalls abnehmbar mit der Kaffeezubereitungsvorrichtung (4) verbunden sein kann, wobei die zweite Kaffeebohnenvorrichtung (3) so angeordnet ist, dass sie mit mehreren Portionen Kaffeebohnen gefüllt werden kann und dass sie diese aufnehmen kann, wobei die zweite Kaffeebohnenvorrichtung (3) Folgendes umfasst:
einen Behälter (7), umfassend ein Innenvolumen und mindestens eine Ausgangsöffnung (29), die einen Kaffeebohnenauslass definiert, wobei das Innenvolumen zum Aufnehmen von Kaffeebohnen angeordnet ist;
ein Transportmittel (6), das geeignet ist, um das Transportieren der Kaffeebohnen von dem Innenvolumen zu der Ausgangsöffnung der zweiten Vorrichtung zu ermöglichen;
wobei die zweite Vorrichtung (3) so an die Kaffeezubereitungsvorrichtung (4) angepasst ist, dass, wenn die zweite Vorrichtung (3) mit der Kaffeezubereitungsvorrichtung (4) verbunden ist, Kaffeebohnen, die mithilfe der Transportmittel (6) der zweiten Vorrichtung (3) zur Ausgangsöffnung (29) der zweiten Vorrichtung (3) transportiert werden, durch die Kaffeezubereitungsvorrichtung (4) über die Eingangsöffung (9) zum Zubereiten von Kaffee empfangen werden können, und wobei die zweite Vorrichtung (3) so angeordnet ist, dass die Transportmittel (6) der zweiten Vorrichtung (3) bei einer vorbestimmten Anzahl an Umdrehungen der Antriebswelle (18) nicht deaktiviert werden oder erst nach einer zweiten vorbestimmten Anzahl an Umdrehungen der Antriebswelle (18) deaktiviert werden, wobei die zweite vorbestimmte Anzahl an Umdrehungen größer als die erste vorbestimmte Anzahl an Umdrehungen ist.

2. System (1) nach Anspruch 1, **dadurch gekennzeichnet, dass** die zweite Vorrichtung (3) nachfüllbar konzipiert ist.

3. System (1) nach Anspruch 1 oder 2, **dadurch gekennzeichnet, dass** die erste Vorrichtung (3) nicht nachfüllbar konzipiert ist.

4. System (1) nach einem der vorhergehenden Ansprüche, **dadurch gekennzeichnet, dass** die erste Vorrichtung (3) so angeordnet ist, dass, wenn die Antriebswelle mit den Transportmitteln (6) verbunden ist, nach einer ersten vorbestimmten Anzahl an Umdrehungen der Antriebswelle (18) in einer anderen oder anderen als für das Antreiben der Transportmittel (6) der ersten Vorrichtung (3) verwendeten Richtung, die Transportmittel (6) der ersten Vorrichtung (3) automatisch für den Transport der Kaffeebohnen zu der Ausgangsöffnung (29) deaktiviert werden.

5. System (1) nach einem der vorhergehenden Ansprüche 1-3, **dadurch gekennzeichnet, dass** die erste Vorrichtung (3) so angeordnet ist, dass, wenn die Antriebswelle (18) mit den Transportmitteln (6) verbunden ist, nach einer ersten vorbestimmten Anzahl an Umdrehungen der Antriebswelle (18) zum Antreiben der Transportmittel (6) der ersten Vorrichtung (3) die Transportmittel (6) der ersten Vorrichtung (3) automatisch für den Transport der Kaffeebohnen zur Ausgangsöffnung (29) deaktiviert werden.

6. System (1) nach einem der vorhergehenden Ansprüche, **dadurch gekennzeichnet, dass** das System (1) geeignet ist, eine automatische Deaktivierung der Transportmittel (6) der ersten Vorrichtung (3) für den Transport der Kaffeebohnen zur Ausgangsöffnung (29) durch Herbeiführen einer Motorabschaltbedingung zu bewirken.

7. System (1) nach einem der vorhergehenden Ansprüche 1-5, **dadurch gekennzeichnet, dass** das System (1) geeignet ist, die automatische Deaktivierung der Transportmittel (6) der ersten Vorrichtung (3) für den Transport der Kaffeebohnen zu der Ausgangsöffnung (29) durch Auskuppeln einer mechanischen Verbindung zu bewirken, sodass die Drehung der Antriebswelle (18) nicht zum Antreiben der Übertragungsmittel oder eines Teils der Übertragungsmittel führt.

8. System (1) nach einem der vorhergehenden Ansprüche, **dadurch gekennzeichnet, dass** der bewegliche Teil der Transportmittel (6) der ersten Vorrichtung (3) ein Scheibenelement (10) umfasst, das sich beim Drehen der Antriebswelle (18) dreht.

9. System (1) nach Anspruch 8, **dadurch gekennzeichnet, dass** das Scheibenelement (10) ein Impeller mit einem Boden und mehreren Schaufeln (13) ist.

10. System (1) nach Anspruch 8 oder 9, **dadurch gekennzeichnet, dass** das Scheibenelement (10) eine Vertiefung aufweist, in der sich das Scheibenelement (10) beim Drehen der Antriebswelle (18) in einer Richtung zum Antreiben der Transportmittel (6) infolge eines Eingreifens von Antriebsmitteln in die Vertiefung dreht.

11. System (1) nach Anspruch 4 und 10, **dadurch gekennzeichnet, dass** die erste Vorrichtung (3) Mittel (1515, 1630) umfasst, um zu bewirken, dass das Scheibenelement (10) beim Drehen der Antriebswelle (18) in einer anderen oder anderen als für das Antreiben der Transportmittel (6) verwendeten Richtung in seiner Position bleibt.

12. System (1) nach Anspruch 11, **dadurch gekennzeichnet, dass** die erste Vorrichtung (3) Mittel (1530) umfasst, um ein Element (1540) der Antriebsmittel in der Vertiefung beim Drehen der Antriebswelle (18) in einer anderen oder anderen als zum Antreiben der Transportmittel (6) verwendeten Richtung zu verschieben.

13. System (1) nach Anspruch 12, **dadurch gekennzeichnet, dass** die Mittel (1530) zum Verschieben so angeordnet sind, dass nach einer ersten vorbestimmten Anzahl an Umdrehungen der Antriebswelle (18) in einer anderen oder anderen als für den Antrieb der Transportmittel (6) verwendeten Richtung das Element (1540) der Antriebsmittel in der Vertiefung eine Position, die einer Motorabschaltbedingung entspricht, oder eine Position, die im Auskuppeln der mechanischen Verbindung (1515, 1630) resultiert, erreicht.

14. System (1) nach den Ansprüchen 12 oder 13, **dadurch gekennzeichnet, dass** die Mittel (1530) zum Verschieben konfiguriert sind, um das Element (1540) durch die Vertiefung in eine Richtung zu verschieben und das Verschieben des Elements in die andere entgegengesetzte Richtung zu verhindern.

15. System (1) nach Anspruch 10, **dadurch gekennzeichnet, dass** die Antriebsmittel die Antriebswelle (18) und eine auf der Antriebswelle (18) montierbare Antriebsbüchse (1530) umfasst.

16. System (1) nach Anspruch 11 und einem der vorhergehenden Ansprüche 12-15, **dadurch gekennzeichnet, dass** die Mittel, um zu bewirken, dass das Scheibenelement (10) beim Drehen der Antriebswelle (18) in einer anderen oder anderen als zum Antreiben der Transportmittel (6) verwendeten Richtung in seiner Position bleibt, eine Rasterverbindung (1515, 1630) zwischen dem Scheibenelement (10) und einer oberen Fläche der Kaffeezubereitungsvorrichtung (4) ist.

17. System (1) nach einem der vorhergehenden Ansprüche, **dadurch gekennzeichnet, dass** die Transportmittel (6) der ersten Vorrichtung (3) eine abwärts verlaufende untere Wand wie beispielsweise einen Trichter (8) des Behälters (7) umfassen, um die Kaffeebohnen unter dem Einfluss von Schwerkraft zu der Ausgangsöffnung (29) der ersten Vorrichtung (3) zu transportieren.

18. System (1) nach einem der vorhergehenden Ansprüche, **dadurch gekennzeichnet, dass** die Transportmittel (6) der zweiten Vorrichtung (3) ein Teil (10) umfassen, das in Bezug auf den Hauptkörper der zweiten Vorrichtung (3) beweglich ist, um beim Antreiben der Transportmittel (6) die Kaffeebohnen zu der Ausgangsöffnung der zweiten Vorrichtung (3) zu transportieren, und dass die Transportmittel (6) lösbar mit der vertikal verlaufenden Antriebswelle (18) der Kaffeezubereitungsvorrichtung (4) verbunden sind, wobei beim Drehen der Antriebswelle (18) mithilfe des Motors (17) die Transportmittel (6) der Vorrichtung (3) angetrieben und dadurch bewegt werden, um die Kaffeebohnen zur Ausgangsöffnung (29) der zweiten Vorrichtung zu transportieren.

19. System (1) nach einem der vorhergehenden Ansprüche, **dadurch gekennzeichnet, dass** das System (1) ferner mit einer Dosierkammer (15) zum Aufnehmen von Kaffeebohnen, die mithilfe der Transportmittel (6) in die Dosierkammer (15) transportiert werden, versehen ist.

20. System (1) nach Anspruch 19, **dadurch gekennzeichnet, dass** die Dosierkammer (15) in einen ersten Kammerabschnitt (23), der Teil der ersten oder zweiten Vorrichtung (3) ist, und einen zweiten Kammerabschnitt (25), der Teil der Kaffeezubereitungsvorrichtung (3) ist, unterteilt ist, wobei der zweite Kammerabschnitt (25) einen unteren Abschnitt (27), der einen Teil des Mahlwerks (28) bildet, umfasst, wobei der untere Abschnitt (27) zum Drehen um eine erste, in vertikaler Richtung verlaufende Achse (35), in der Kaffeezubereitungsvorrichtung (4) angeordnet ist, wobei das System (1) so angeordnet ist, dass sich der untere Abschnitt (27) beim Aktivieren des Mahlwerks (28) um die vertikale Achse (35) dreht, um die Kaffeebohnen aus der Dosierkammer (15) in das Mahlwerk (28) zum Mahlen der Kaffeebohnen zu transportieren.

21. System (1) nach Anspruch 20, **dadurch gekennzeichnet, dass** der untere Abschnitt (27) eine konische Form aufweist, sodass der untere Abschnitt (27) abwärts in einer lotrecht zu und weg von der ersten vertikalen Achse (35) verlaufenden Richtung verläuft und dass der erste Kammerabschnitt (23) die Ausgangsöffnung (29) der ersten oder zweiten Vorrichtung (3) umfasst und der zweite Kammerabschnitt (25) die Eingangsöffnung (9) umfasst.

22. System (1) nach Anspruch 21, **dadurch gekennzeichnet, dass** der erste Kammerabschnitt (23) über dem zweiten Kammerabschnitt (25) angeordnet ist, wobei die Ausgangsöffnung (29) der ersten oder zweiten Vorrichtung (3) über der Eingangsöffnung (9) verläuft.

23. System (1) nach einem der vorhergehenden Ansprüche, **dadurch gekennzeichnet, dass** die erste und/oder die zweite Vorrichtung (3) Schließmittel (1633, 1635) umfasst, um die Ausgangsöffnung (29) zu verschließen, wenn die Vorrichtung (3) nicht mit der Kaffeezubereitungsvorrichtung (4) verbunden ist.

24. System (1) nach Anspruch 23, **dadurch gekennzeichnet, dass** die Schließmittel (1633, 1635) konfiguriert sind, um die Ausgangsöffnung (29) zu öffnen, wenn die Vorrichtung (3) mit der Kaffeezubereitungsvorrichtung (4) verbunden ist.

25. System (1) nach einem der vorhergehenden Ansprüche, **dadurch gekennzeichnet, dass** die Ausgangsöffnung (29) der ersten und/oder zweiten Vorrichtung (3) mit einem entfernbaren Dichtungselement (1681) verbunden ist, welches das Innenvolumen vor der Aktivierung der Vorrichtung (3) abdichtet, wobei bevorzugt das Dichtungselement (1681) das Austreten von Gasen aus der Vorrichtung (3) verhindert.

26. System (1) nach einem der vorhergehenden Ansprüche, **dadurch gekennzeichnet, dass** die Kaffeezubereitungsvorrichtung (4) Verbindungsmittel zum lösbaren Verbinden mit der Kaffeebohnenverpackungsvorrichtung (3) umfasst, wobei die Verbindungsmittel eine Vertiefung (50) an einer oberen Seite der Kaffeezubereitungsvorrichtung (4) umfassen, die Vertiefung (50) von einer Seitenwand (54) umgeben ist und konfiguriert ist, um ein entsprechendes Teil (1683, 1685), das von einer unteren Seite der ersten und/oder zweiten Vorrichtung (3) hervorsteht, aufzunehmen.

27. System (1) nach Anspruch 26, **dadurch gekennzeichnet, dass** die Seitenwand (54) Öffnungen (58) zum Aufnehmen von Bajonettelementen (1683, 1685) der ersten und/oder zweiten Vorrichtung (3) umfasst.

28. System (1) nach Anspruch 27, **dadurch gekennzeichnet, dass** die erste und/oder zweite Vorrichtung (3) die Bajonettelemente (1683, 1685) umfasst.

29. System (1) nach einem der vorhergehenden Ansprüche, **dadurch gekennzeichnet, dass** es Steuermittel (40) umfasst, um die vertikal verlaufende Antriebswelle (18) mit den Motormitteln (17) zu drehen und dadurch die Transportmittel (6) anzutreiben und zu bewegen, um die Kaffeebohnen zu der Ausgangsöffnung (29) der ersten und/oder zweiten Vorrichtung (3) zu transportieren;
die Kaffeebohnen, die über die Eingangsöffnung (9) in die Kaffeezubereitungsvorrichtung gelangt sind, zu mahlen; und
Kaffee aus dem gemahlenen Kaffee und heißem Wasser, erwärmt durch eine Erwärmungsvorrichtung der Kaffeezubereitungsvorrichtung (4), zu brühen.

30. System (1) nach Anspruch 29 und 19-22, **dadurch gekennzeichnet, dass** die Steuermittel (40) konfiguriert sind, um die vertikal verlaufende Antriebswelle (18) mit den Motormitteln (17) zu drehen und dadurch die Transportmittel (6) der ersten und/oder zweiten Vorrichtung (3) anzutreiben und zu bewegen, um die Dosierkammer (15) zu füllen, und dass die Steuermittel (40) ferner so konfiguriert sind, um nach dem Füllen der Dosierkammer (15) die Antriebswelle (18) mit den Motormitteln (17) in eine andere oder andere als zum Antreiben der Transportmittel (6) der ersten und/oder zweiten Vorrichtung verwendete Richtung zu drehen.

31. System (1) nach einem der vorhergehenden Ansprüche, **dadurch gekennzeichnet, dass** die erste vorbestimmte Anzahl an Umdrehungen der Antriebswelle (18), die das Deaktivieren der Transportmittel (6) bewirkt, größer ist als die Anzahl an Umdrehungen, die der Anzahl der Portionen Kaffee, die mit der vollen Vorrichtung (3) möglich ist, entspricht.

32. Erste Kaffeebohnenverpackungsvorrichtung (3), geeignet zur Verwendung in einem Kaffeegetränksystem (1) nach einem der Ansprüche 1-31, wobei die erste Kaffeebohnenverpackungsvorrichtung (3) angeordnet ist, um entfernbar mit einer Kaffeezubereitungsvorrichtung (4) eines Kaffeegetränksystems (1) verbunden zu werden, wobei die erste Kaffeebohnenverpackungsvorrichtung (3) angeordnet ist, um mehrere Portionen Kaffeebohnen aufzunehmen und zu liefern, und die Folgendes umfasst:
einen Behälter (7), umfassend ein Innenvolumen und mindestens eine Ausgangsöffnung (29), die einen Kaffeebohnenauslass definiert, wobei das Innenvolumen Kaffeebohnen aufnimmt;
Transportmittel (6), geeignet um den Transport der Kaffeebohnen aus dem Innenvolumen zu der Ausgangsöffnung (29) der ersten Vorrichtung (3) zu ermöglichen;
wobei die Transportmittel (6) ein Teil umfassen, das in Bezug auf den Hauptkörper der ersten Vorrichtung (3) beweglich ist, um beim Antreiben der Transportmittel (6) die Kaffeebohnen zu der Ausgangsöffnung (29) der ersten Vorrichtung (3) zu transportieren, **dadurch gekennzeichnet, dass** die Transportmittel (6) so angeordnet sind, um lösbar mit einer vertikal verlaufenden Antriebswelle (18) einer mit einem Motor (17) versehenen Kaffeezubereitungsvorrichtung (4) verbunden zu werden, wobei die Transportmittel (6) der Vorrichtung angeordnet sind, um beim Drehen der Antriebswelle durch den Motor (17) angetrieben und dadurch bewegt zu werden, um die Kaffeebohnen zu der Ausgangsöffnung (29) der ersten Vorrichtung zu transportieren, wobei die erste Vorrichtung (3) so angeordnet ist, dass, wenn die Antriebswelle (18) mit den Transportmitteln (6) verbunden ist, die Transportmittel (6) der ersten Vorrichtung (3) nach einer ersten vorbestimmten Anzahl an Umdrehungen der Antriebswelle automatisch für den Transport der Kaffeebohnen zu der Ausgangsöffnung (29) deaktiviert werden.

33. Erste Vorrichtung (3) nach Anspruch 32, **dadurch gekennzeichnet, dass** sie nicht nachfüllbar konzipiert ist.

34. Erste Vorrichtung (3) nach Anspruch 32 oder 33, **dadurch gekennzeichnet, dass** sie angeordnet ist, um die automatische Deaktivierung der Transportmittel (6) der ersten Vorrichtung (3) für den Transport der Kaffeebohnen zu der Ausgangsöffnung (29) durch Herbeiführen einer Motorabschaltbedingung zu bewirken.

35. Kaffeezubereitungsvorrichtung (4) zur Verwendung in einem System (1) nach Anspruch 4 und den Ansprüchen 19-22, wobei die Kaffeezubereitungsvorrichtung eine Eingangsöffnung (9) zum Aufnehmen von Kaffeebohnen, ein Mahlwerk (28) zum Mahlen von Kaffeebohnen, die über die Eingangsöffnung (9) in die Kaffeevorrichtung gelangt sind, und eine Brühvorrichtung (46) zum Brühen von Kaffee aus dem mithilfe des Mahlwerks (28) erhaltenen gemahlenen Kaffee, und wobei die Kaffeezubereitungsvorrichtung (4) mit einem Motor (17) versehen ist, **dadurch gekennzeichnet, dass** die Kaffeezubereitungsvorrichtung eine vertikal verlaufende Antriebswelle (18), die lösbar mit den Transportmitteln (6) einer Kaffeebohnenvorrichtung verbunden ist, umfasst, wobei die Kaffeezubereitungsvorrichtung (4) einen Kammerabschnitt (25) zum Aufnehmen von Kaffeebohnen umfasst, der Kammerabschnitt (25) einen unteren Abschnitt (27), der einen Teil des Mahlwerks (28) bildet, umfasst, wobei der untere Teil (27) zum Drehen um eine vertikale Achse (35) angeordnet ist, und Steuermittel umfasst, die zum Drehen der vertikal verlaufenden Antriebswelle (18) mit dem Motor (17) konfiguriert sind, um dadurch die Transportmittel (6) der Kaffeebohnenvorrichtung zum Füllen des Kammerabschnitts anzutreiben und zu bewegen, dass die Steuermittel ferner konfiguriert sind, um nach dem Füllen des Kammerabschnitts die Antriebswelle (18) mit dem Motor (17) in eine andere oder andere als zum Antreiben der Transportmittel (6) einer Kaffeebohnenvorrichtung verwendete Richtung zu drehen, und dass die Vorrichtung (4) so angeordnet ist, dass beim Aktivieren des Mahlwerks (28) der untere Abschnitt (27) um die vertikale Achse (35) gedreht wird, um die Kaffeebohnen aus der Dosierkammer (15) zum Mahlen der Kaffeebohnen in das Mahlwerk (28) zu transportieren.

36. Verfahren zur Zubereitung eines Getränks mithilfe eines Kaffeegetränksystems (1) nach einem der Ansprüche 1-31, wenn die erste Kaffeebohnenverpackungsvorrichtung (3) des Kaffeegetränksystems (1) mit dessen Kaffeezubereitungsvorrichtung (4) verbunden ist, wobei das Verfahren folgende Schritte umfasst:
Drehen der vertikal verlaufenden Antriebswelle (18) mit den Motormitteln (17), um dadurch die Transportmittel (6) der ersten Vorrichtung (3) anzutreiben und zu bewegen, um die Kaffeebohnen zu der Ausgangsöffnung (29) der ersten Vorrichtung (3) zu transportieren;
Mahlen von Kaffeebohnen, die über die Eingangsöffnung (4) in die Kaffeevorrichtung (14) gelangt sind;
Brühen von Kaffee aus gemahlenem Kaffee; und,
nach einer ersten vorbestimmten Anzahl an Umdrehungen der Antriebswelle (18), automatisches Deaktivieren der Transportmittel (6) der ersten Vorrichtung (3) zum Transportieren der Kaffeebohnen zu der Ausgangsöffnung (29).

37. Verfahren zur Zubereitung eines Getränks mithilfe eines Kaffeegetränksystems (1) nach einem der Ansprüche 1-31 wenn die zweite Kaffeebohnenverpackungsvorrichtung (3) des Kaffeegetränksystems (1) mit dessen Kaffeezubereitungsvorrichtung (14) verbunden ist, wobei das Verfahren folgende Schritte umfasst:
Drehen der vertikal verlaufenden Antriebswelle (18) mit den Motormitteln (17), um dadurch die Transportmittel (6) der zweiten Vorrichtung (3) anzutreiben und zu bewegen, um die Kaffeebohnen zu der Ausgangsöffnung (29) der zweiten Vorrichtung (3) zu transportieren;
Mahlen von Kaffeebohnen, die über die Eingangsöffnung (9) in die Kaffeevorrichtung (4) gelangt sind;
Brühen von Kaffee aus gemahlenem Kaffee; und,
Drehen der vertikal verlaufenden Antriebswelle (18) mit den Motormitteln (17) in eine Richtung, entgegengesetzt zu der Richtung zum Antreiben der Transportmittel (6) der zweiten Vorrichtung (3), um die Kaffeebohnen zu der Ausgangsöffnung (29) der zweiten Vorrichtung (3) zu transportieren;
wobei die Transportmittel (6) der zweiten Vorrichtung (3) nach einer vorbestimmten Anzahl an Umdrehungen der Antriebswelle (13) in eine andere oder eine andere als zum Antreiben der Transportmittel (6) der zweiten Vorrichtung (3) verwendete Richtung nicht deaktiviert werden oder nur nach einer zweiten vorbestimmten Anzahl an Umdrehungen der Antriebswelle (18) deaktiviert werden, wobei die zweite vorbestimmte Anzahl an Umdrehungen größer ist als eine erste vorbestimmte Anzahl an Umdrehungen der Antriebswelle (18), nach der die Transportmittel (6) der ersten Vorrichtung (3) nach Anspruch 33 für das Transportieren der Kaffeebohnen der ersten Vorrichtung (3) zu der Ausgangsöffnung (29) der ersten Vorrichtung (3) automatisch deaktiviert werden.

38. Verfahren nach Anspruch 37 zur Verwendung mit einem System (1) nach einem der vorhergehenden Ansprüche 19-22, **dadurch gekennzeichnet, dass** die Transportmittel (6) angetrieben werden, um die Dosierkammer (15) zu füllen, und dass die Antriebswelle (18) mit den Motormitteln (17) nach dem Füllen der Dosierkammer (15) in eine andere oder eine andere als zum Antreiben der Transportmittel (6) der ersten und/oder zweiten Vorrichtung (3) verwendete Richtung gedreht wird.

## Revendications

1. Système de boisson au café (1) comprenant une première cartouche de conditionnement de grains de café (3) et un appareil d'infusion de café (4), dans lequel la première cartouche de conditionnement de grains de café (3) peut être raccordée de manière amovible à l'appareil d'infusion de café (4), la première cartouche de conditionnement de grains de café (3) étant agencée pour contenir et fournir plusieurs portions de grains de café, la première cartouche de conditionnement de grains de café (3) comprenant:
un récipient (7) comprenant une volume intérieur et au moins une ouverture de sortie (29) définissant une sortie de grains de café, le volume intérieur contenant des grains de café;
des moyens de transport (6) adaptés pour permettre le transport des grains de café du volume intérieur vers l'ouverture de sortie (29) de la première cartouche (3);
dans lequel la machine à café comprend une ouverture d'entrée (29) pour recevoir des grains de café qui sont transportés à l'aide des moyens de transport (6) vers l'ouverture de sortie (29) de la première cartouche (3), un moulin à café (28) pour moudre les grains de café qui sont entrés dans la machine à café (4) via l'ouverture d'entrée (9) et un dispositif d'infusion (46) pour infuser le café en fonction du café moulu obtenu au moyen du moulin à café (28), dans lequel les moyens de transport (6) de la première cartouche (3) comprennent une partie qui est mobile par rapport à un corps principal de la première cartouche (3) pour transporter les grains de café vers l'ouverture de sortie (29) de la première cartouche (3) suite à l'entraînement desdits moyens de transport (6), **caractérisé en ce que** l'appareil d'infusion de café (4) est prévu avec un moteur (17) et un arbre d'entraînement (18) s'étendant verticalement, dans lequel ledit arbre d'entraînement (18) est raccordé de manière amovible avec les moyens de transport (6) de la première cartouche (3) pour entraîner et donc déplacer les moyens de transport (6) de la première cartouche (3) suite à la rotation de l'arbre d'entraînement (18) au moyen des moyens de moteur (17) pour transporter les grains de café vers une ouverture de sortie (29) de la première cartouche (3), dans lequel la première cartouche (3) est agencée de sorte que, si l'arbre d'entraînement (18) est raccordé avec les moyens de transport (6), après un premier nombre prédéterminé de révolutions de l'arbre d'entraînement (18), les moyens de transport (6) de la première cartouche (3) sont automatiquement désactiver pour transporter les grains de café vers l'ouverture de sortie (29) et dans lequel le système (1) est en outre prévu avec une seconde cartouche de grains de café qui peut également être raccordée de manière amovible à l'appareil d'infusion de café (4), la seconde cartouche de grains de café (3) étant agencée pour être remplie avec et contenir et fournir plusieurs portions de grains de café, la seconde cartouche de grains de café (3) comprenant:
un récipient (7) comprenant un volume intérieur et au moins une ouverture de sortie (29) définissant une sortie de grains de café, le volume intérieur étant agencé pour contenir des grains de café;
des moyens de transport (6) adaptés pour permettre le transport des grains de café du volume intérieur vers l'ouverture de sortie de la seconde cartouche;
dans lequel la seconde cartouche (3) est adaptée à la machine à café (4) de sorte que, si la seconde cartouche (3) est raccordée à la machine à café (4), les grains de café qui sont transportés à l'aide des moyens de transport (6) de la seconde cartouche (3) vers l'ouverture de sortie (29) de la seconde cartouche (3), peuvent être reçus par la machine à café (4) via l'ouverture d'entrée (9) pour préparer du café et dans lequel la seconde cartouche (3) est agencée de sorte que les moyens de transport (6) de la seconde cartouche (3) ne sont pas désactivés après un nombre prédéterminé de révolutions de l'arbre d'entraînement (18) ou sont uniquement désactivés après un second nombre prédéterminé de révolutions de l'arbre d'entraînement (18), dans lequel le second nombre prédéterminé de révolutions est supérieur au premier nombre prédéterminé de révolutions.

2. Système (1) selon la revendication 1, **caractérisé en ce que** la seconde cartouche (3) est conçue pour être rechargeable.

3. Système (1) selon la revendication 1 ou 2, **caractérisé en ce que** la première cartouche (3) est conçue pour ne pas être rechargeable.

4. Système (1) selon l'une quelconque des revendications précédentes, **caractérisé en ce que** la première cartouche (3) est agencée de sorte que, si l'arbre d'entraînement (18) est raccordé avec les moyens de transport (6), après un premier nombre prédéterminé de révolutions de l'arbre d'entraînement (18) dans une direction différente des moyens de transport ou différente de celle utilisée pour entraîner les moyens de transport (6) de la première cartouche (3), les moyens de transport (6) de la première cartouche (3) sont automatiquement désactivés pour transporter les grains de café vers l'ouverture de sortie (29).

5. Système (1) selon l'une quelconque des revendications 1 à 3, **caractérisé en ce que** la première cartouche (3) est agencée de sorte que, si l'arbre d'entraînement (18) est raccordé avec les moyens de transport (6) après un premier nombre prédéterminé de révolutions de l'arbre d'entraînement (18) pour entraîner les moyens de transport (6) de la première cartouche (3), les moyens de transport (6) de la première cartouche (3) sont automatiquement désactivés pour transporter les grains de café vers l'ouverture de sortie (29).

6. Système (1) selon l'une quelconque des revendications précédentes, **caractérisé en ce que** le système (1) est agencé pour exécuter la désactivation automatique des moyens de transport (6) de la première cartouche (3) pour transporter les grains de café vers l'ouverture de sortie (29) en les amenant dans une condition de calage de moteur.

7. Système (1) selon l'une quelconque des revendications 1 à 5, **caractérisé en ce que** le système (1) est agencé pour exécuter la désactivation automatique des moyens de transport (6) de la première cartouche (3) pour transporter les grains de café vers l'ouverture de sortie (29) au moyen du dégagement d'un raccordement mécanique, de sorte que la rotation de l'arbre d'entraînement (18) ne se traduit pas par l'entraînement des moyens de transmission ou d'une partie des moyens de transmission.

8. Système (1) selon l'une quelconque des revendications précédentes, **caractérisé en ce que** la partie mobile des moyens de transport (6) de la première cartouche (3) comprend un élément de disque (10) qui tourne suite à la rotation de l'arbre d'entraînement (18).

9. Système (1) selon la revendication 8, **caractérisé en ce que** l'élément de disque (10) est un rotor comprenant un fond et une pluralité de pales (13).

10. Système (1) selon la revendication 8 ou 9, **caractérisé en ce que** l'élément de disque (10) comprend un évidement dans lequel l'élément de disque (10) tourne suite à la rotation de l'arbre d'entraînement (18) dans une direction pour entraîner les moyens de transport (6) due à une mise en prise des moyens d'entraînement avec l'évidement.

11. Système (1) selon les revendications 4 et 10, **caractérisé en ce que** la première cartouche (3) comprend des moyens (1515, 1630) pour amener l'élément de disque (10) à rester dans sa position suite à la rotation de l'arbre d'entraînement (18) dans la direction différente des moyens de transport ou différente de celle utilisée pour entraîner les moyens de transport (6).

12. Système (1) selon la revendication 11, **caractérisé en ce que** la première cartouche (3) comprend des moyens (1530) pour le déplacement d'un élément (1540) des moyens d'entraînement dans l'évidement suite à la rotation de l'arbre d'entraînement (18) dans la direction différente des moyens de transport ou différente de celle utilisée pour entraîner les moyens de transport (6).

13. Système (1) selon la revendication 12, **caractérisé en ce que** les moyens (1530) pour le déplacement sont agencés de sorte qu'après un premier nombre prédéterminé de révolutions de l'arbre d'entraînement (18) dans la direction différente des moyens de transport ou différente de celle utilisée pour entraîner les moyens de transport (6), l'élément (1540) des moyens d'entraînement dans l'évidement atteint une position correspondant à une condition de calage de moteur ou une position se traduisant par le dégagement du raccordement mécanique (1515, 1630).

14. Système (1) selon les revendications 12 ou 13, **caractérisé en ce que** les moyens (1530) pour le déplacement sont configurés pour déplacer l'élément (1540) à travers l'évidement dans une direction et empêcher le déplacement de l'élément dans l'autre direction opposée.

15. Système (1) selon la revendication 10, **caractérisé en ce que** les moyens d'entraînement comprennent l'arbre d'entraînement (18) et un coussinet pour arbre d'entraînement (1530) pouvant être monté sur l'arbre d'entraînement (18).

16. Système (1) selon la revendication 11 et l'une quelconque des revendications 12 à 15, **caractérisé en ce que** les moyens pour amener l'élément de disque (10) à rester dans sa position suite à la rotation de l'arbre d'entraînement (18) dans la direction différente des moyens de transport ou différente de celle utilisée pour entraîner les moyens de transport (6) sont un raccordement à encliquetage (1515, 1630) entre l'élément de disque (10) et une surface supérieure de l'appareil d'infusion de café (4).

17. Système (1) selon l'une quelconque des revendications précédentes, **caractérisé en ce que** les moyens de transport (6) de la première cartouche (3) comprennent une paroi inférieure s'étendant vers le bas telle qu'un entonnoir (8) du récipient (7) pour transporter les grains de café vers l'ouverture de sortie (29) de la première cartouche (3) sous l'effet de la gravité.

18. Système (1) selon l'une quelconque des revendications précédentes, **caractérisé en ce que** les moyens de transport (16) de la seconde cartouche (3) comprennent une partie (10) qui est mobile par rapport à un corps principal de la seconde cartouche (3) pour transporter les grains de café vers l'ouverture de sortie de la seconde cartouche (3) suite à l'entraînement desdits moyens de transport (6) et **en ce que** les moyens de transport (6) peuvent être raccordés de manière amovible avec l'arbre d'entraînement (18) s'étendant verticalement de l'appareil d'infusion de café (4), dans lequel suite à la rotation de l'arbre d'entraînement (18) au moyen du moteur (17), les moyens de transport (6) de la cartouche (3) sont entraînés et ainsi déplacés pour transporter les grains de café vers l'ouverture de sortie (29) de la seconde cartouche.

19. Système (1) selon l'une quelconque des revendications précédentes, **caractérisé en ce que** le système (1) est en outre prévu avec une chambre de dosage (15) pour recevoir des grains de café qui sont transportés à l'aide des moyens de transport (6) dans la chambre de dosage (15).

20. Système (1) selon la revendication 19, **caractérisé en ce que** la chambre de dosage (15) est divisée en une première partie de chambre (23) qui fait partie de la première ou de la seconde cartouche (3) et en une seconde partie de chambre (25) qui fait partie de l'appareil d'infusion de café (4), dans lequel la seconde partie de chambre (25) comprend une partie de fond (27) qui fait partie du moulin à café (28), ladite partie de fond (27) étant agencée dans l'appareil d'infusion de café (4) pour tourner autour d'un premier axe (35) s'étendant dans une direction verticale, dans lequel le système (1) est agencé de sorte que suite à l'activation du moulin à café (28), la partie de fond (27) tourne autour de l'axe vertical (35) pour transporter les grains de café de la chambre de dosage (15) dans le moulin à café (28) et pour moudre les grains de café.

21. Système (1) selon la revendication 20, **caractérisé en ce que** la partie de fond (27) a une forme conique de sorte que la partie de fond (27) s'étend vers le bas dans une direction s'étendant perpendiculairement vers et à distance du premier axe vertical (35) et **en ce que** la première partie de chambre (23) comprend l'ouverture de sortie (29) de la première ou de la seconde cartouche (3) et la seconde partie de chambre (25) comprend l'ouverture d'entrée (9).

22. Système (1) selon la revendication 21, **caractérisé en ce que** la première partie de chambre (23) est positionnée au-dessus de la seconde partie de chambre (25), dans lequel l'ouverture de sortie (29) de la première ou seconde cartouche (3) s'étend au-dessus de l'ouverture d'entrée (9).

23. Système (1) selon l'une quelconque des revendications précédentes, **caractérisé en ce que** la première et/ou la seconde cartouche (3) comprend des moyens de fermeture (1633, 1635) pour fermer l'ouverture de sortie (29) lorsque la cartouche (3) n'est pas raccordée à l'appareil d'infusion de café (4).

24. Système (1) selon la revendication 23, **caractérisé en ce que** les moyens de fermeture (1633, 1635) sont configurés pour ouvrir l'ouverture de sortie (29) lorsque la cartouche (3) est raccordée à l'appareil d'infusion de café (4).

25. Système (1) selon l'une quelconque des revendications précédentes, **caractérisé en ce que** l'ouverture de sortie (29) de la première et/ou la seconde cartouche (3) est associée avec un élément d'étanchéité amovible (1681) scellant le volume intérieur avant l'activation de la cartouche (3), dans lequel de préférence ledit élément d'étanchéité (1681) empêche la fuite des gaz de la cartouche (3).

26. Système (1) selon l'une quelconque des revendications précédentes, **caractérisé en ce que** l'appareil d'infusion de café (4) comprend des moyens de raccordement pour le raccordement amovible à la cartouche de conditionnement de grains de café (3), les moyens de raccordement comprenant un évidement (50) au niveau d'un côté supérieur de l'appareil d'infusion de café (4), l'évidement (50) étant entouré par une paroi latérale (54) et étant configuré pour recevoir une partie (1683, 1685) correspondante faisant saillie d'un côté inférieur de la première et/ou seconde cartouche (3).

27. Système (1) selon la revendication 26, **caractérisé en ce que** la paroi latérale (54) comprend des ouvertures (58) pour recevoir des éléments à baïonnette (1683, 1685) de la première et/ou seconde cartouche (3).

28. Système (1) selon la revendication 27, **caractérisé en ce que** la première et/ou seconde cartouche (3) comprend les éléments à baïonnette (1683, 1685).

29. Système (1) selon l'une quelconque des revendications précédentes, **caractérisé en ce qu'**il comprend des moyens de commande (40) pour faire tourner l'arbre d'entraînement (18) s'étendant verticalement avec les moyens de moteur (17) entraînant et déplaçant ainsi les moyens de transport (6) pour transporter les grains de café vers l'ouverture de sortie (29) de la première et/ou seconde cartouche (3);
moudre les grains de café qui ont pénétré dans l'appareil de café via son ouverture d'entrée (9); et
infuser le café en fonction du café moulu et de l'eau chaude chauffée par un dispositif de chauffage de l'appareil d'infusion de café (4).

30. Système (1) selon les revendications 29 et 19 à 22, **caractérisé en ce que** les moyens de commande (40) sont configurés pour faire tourner l'arbre d'entraînement (18) s'étendant verticalement avec les moyens de moteur (17) entraînant et déplaçant ainsi les moyens de transport (6) de la première et/ou seconde cartouche (3) pour remplir la chambre de dosage (15) et **en ce que** les moyens de commande (40) sont en outre configurés pour faire tourner l'arbre d'entraînement (18) avec les moyens de moteur (17) dans une direction différente des moyens de transport ou différente de celle utilisée pour entraîner les moyens de transport (6) de la première et/ou seconde cartouche (3), après le remplissage de la chambre de dosage (15).

31. Système (1) selon l'une quelconque des revendications précédentes, **caractérisé en ce que** le premier nombre prédéterminé de révolutions de l'arbre d'entraînement (18) provenant de la désactivation des moyens de transport (6) est supérieur au nombre de révolutions correspondant au nombre de portions de café possibles avec la cartouche pleine (3).

32. Première cartouche de conditionnement de grains de café (3) appropriée pour être utilisée dans un système de boisson au café (1) selon l'une quelconque des revendications 1 à 31, dans laquelle la première cartouche de conditionnement de grains de café (3) est agencée pour pouvoir être raccordée de manière amovible à un appareil d'infusion de café (4) d'un système de boisson au café (1), la première cartouche de conditionnement de grains de café (3) étant agencée pour contenir et fournir plusieurs portions de grains de café et comprenant:
un récipient (7) comprenant un volume intérieur et au moins une ouverture de sortie (29) définissant une sortie de grains de café, le volume intérieur contenant des grains de café;
des moyens de transport (6) adaptés pour permettre le transport des grains de café du volume intérieur vers l'ouverture de sortie (29) de la première cartouche (3);
dans laquelle les moyens de transport (6) comprennent une partie qui est mobile par rapport à un corps principal de la première cartouche (3) pour transporter les grains de café vers l'ouverture de sortie (29) de la première cartouche (3) suite à l'entraînement desdits moyens de transport (6), **caractérisée en ce que** les moyens de transport (6) sont agencés pour pouvoir être raccordés de manière amovible avec un arbre d'entraînement (18) s'étendant verticalement d'un appareil d'infusion de café (4), prévu avec un moteur (17), dans laquelle les moyens de transport (6) de la cartouche sont agencés pour être entraînés et donc déplacés pour transporter les grains de café vers l'ouverture de sortie (29) de la première cartouche suite à la rotation de l'arbre d'entraînement au moyen du moteur (17), dans laquelle la première cartouche (3) est agencée de sorte que, si l'arbre d'entraînement (18) est raccordé avec les moyens de transport (6), après un premier nombre prédéterminé de révolutions de l'arbre d'entraînement, les moyens de transport (6) de la première cartouche (3) sont automatiquement désactivés pour transporter les grains de café vers l'ouverture de sortie (29).

33. Première cartouche (3) selon la revendication 32, **caractérisée en ce qu'**elle est conçue pour ne pas être rechargeable.

34. Première cartouche (3) selon la revendication 32 ou 33, **caractérisé en ce qu'**elle est agencée pour exécuter la désactivation automatique des moyens de transport (6) de la première cartouche (3) pour transporter les grains de café vers l'ouverture de sortie (29) en les amenant dans la condition de calage de moteur.

35. Appareil d'infusion de café (4) destiné à être utilisé dans un système (1) selon la revendication 4 et les revendications 19 à 22, dans lequel l'appareil de café comprend une ouverture d'entrée (9) pour recevoir des grains de café, un moulin à café (28) pour moudre des grains de café qui sont entrés dans l'appareil de café via l'ouverture d'entrée (9) et un dispositif d'infusion (46) pour infuser le café en fonction du café moulu obtenu au moyen du moulin à café (28) et dans lequel l'appareil d'infusion de café (4) est prévu avec un moteur (17), **caractérisé en ce que** l'appareil d'infusion de café comprend un arbre d'entraînement (18) s'étendant verticalement, dans lequel ledit arbre d'entraînement (18) est raccordé de manière amovible avec des moyens de transport (6) d'une cartouche de grains de café, l'appareil d'infusion de café (4) comprenant une partie de chambre (25) pour recevoir des grains de café, ladite partie de chambre (25) comprenant une partie de fond (27) qui fait partie du moulin à café (28), ladite partie de fond (27) étant agencée pour tourner autour d'un axe vertical (35), et des moyens de commande qui sont configurés pour faire tourner l'arbre d'entraînement (18) s'étendant verticalement avec le moteur (17) entraînant et déplaçant ainsi les moyens de transport (6) d'une cartouche de grains de café pour remplir la partie de chambre, **en ce que** les moyens de commande sont en outre configurés pour faire tourner l'arbre d'entraînement (18) avec le moteur (17) dans une direction différente des moyens de transport ou différente de celle utilisée pour entraîner les moyens de transport (16) d'une cartouche de grains de café (3), après le remplissage de la partie de chambre, et **en ce que** l'appareil (4) est agencé de sorte que suite à l'activation du moulin à café (28), la partie de fond (27) tourne autour de l'axe vertical (35) pour transporter les grains de café de la chambre de dosage (15) dans le moulin à café (28) et pour moudre les grains de café.

36. Procédé pour préparer une boisson au moyen d'un système de boisson au café (1) selon l'une quelconque des revendications 1 à 31, lorsque la première cartouche de conditionnement de grains de café (3) du système de boisson de café (1) est raccordée à son appareil d'infusion de café (4), le procédé comprenant les étapes suivantes consistant à:
faire tourner l'arbre d'entraînement (18) s'étendant verticalement avec les moyens de moteur (17) entraînant et déplaçant ainsi les moyens de transport (16) de la première cartouche (3) pour transporter les grains de café vers l'ouverture de sortie (29) de la première cartouche (3);
moudre les grains de café qui ont pénétré dans l'appareil de café (14) via son ouverture d'entrée (4);
infuser le café en fonction du café moulu; et
après un premier nombre prédéterminé de révolutions de l'arbre d'entraînement (18), désactiver automatiquement les moyens de transport (6) de la première cartouche (3) pour transporter les grains de café vers l'ouverture de sortie (29).

37. Procédé pour préparer une boisson au moyen d'un système de boisson au café (1) selon l'une quelconque des revendications 1 à 31, lorsque la seconde cartouche de conditionnement de grains de café (3) du système de boisson au café (1) est raccordée à son appareil d'infusion de café (14), le procédé comprenant les étapes suivantes consistant à:
faire tourner l'arbre d'entraînement (18) s'étendant verticalement avec les moyens de moteur (17) entraînant et déplaçant ainsi les moyens de transport (16) de la seconde cartouche (3) pour transporter les grains de café vers l'ouverture de sortie (29) de la seconde cartouche (3);
moudre les grains de café qui ont pénétré dans l'appareil de café (4) via son ouverture d'entrée (9);
infuser le café en fonction du café moulu; et
faire tourner l'arbre d'entrainement (18) s'étendant verticalement avec les moyens de moteur (17) dans une direction opposée à la direction pour entraîner les moyens de transport (16) de la seconde cartouche (3) afin de transporter les grains de café vers l'ouverture de sortie (29) de la seconde cartouche (3);
dans lequel les moyens de transport (6) de la seconde cartouche (3) ne sont pas désactivés suite à un nombre prédéterminé de révolutions de l'arbre d'entraînement (13) dans la direction différente des moyens de transport ou différente de celle utilisée pour entraîner les moyens de transport (6) de la seconde cartouche (3) ou sont uniquement désactivés après un second nombre prédéterminé de révolutions de l'arbre d'entraînement (18), dans lequel le second nombre prédéterminé de révolutions est supérieur à un premier nombre prédéterminé de révolutions de l'arbre d'entraînement (18), après quoi, les moyens de transport (6) de la première cartouche (3) selon la revendication 33 sont automatiquement désactivés pour transporter les grains de café de la première cartouche (3) vers l'ouverture de sortie (29) de la première cartouche (3).

38. Procédé selon la revendication 37 destiné à être utilisé avec un système (1) selon l'une quelconque des revendications 19 à 22, **caractérisé en ce que** les moyens de transport (6) sont entrainés pour remplir la chambre de dosage (15) et **en ce que** l'arbre d'entraînement (18) est entraîné en rotation avec les moyens de moteur (17) dans la direction différente des moyens de transport ou différente de celle utilisée pour entraîner les moyens de transport (6) de la première et/ou de la seconde cartouche (3), après le remplissage de la chambre de dosage (15).
